# EUROPEAN PATENT APPLICATION

(11) **EP 4 742 553 A1**
(43) Date of publication of application: **13.05.2026**
(21) Application number: 25212073.8
(22) Date of filing: 29.10.2025
(51) Int. Cl.: H04B 7/06, H04L 5/00, H04W 36/00

(54) **METHOD FOR HANDLING CHANNEL STATUS INFORMATION REPORT AND USER EQUIPMENT**

(30) Priority: 08.11.2024 US 202463717898 P; 09.10.2025 US 202519353637
(71) Applicant: Industrial Technology Research Institute, 310401 Hsinchu (TW)
(72) Inventor: Lee, Chien-Min, Taoyuan City 324 (TW); Lo, Li-Chung, Taichung City 407 (TW); Chen, Jen-Hsien, Minxiong Township, Chiayi County 621 (TW); Wang, Hung-Hsiang, Zhudong Township, Hsinchu County 310 (TW)
(74) Representative: Becker Kurig & Partner Patentanwälte mbB

(57) **Abstract**

The embodiments of the disclosure provide a handling a channel status information, CSI, report and a user equipment, UE, (200). The method includes: determining (S310) a first CSI according to a first set of reference signal, wherein the first set of reference signal is determined according to a first configuration transmitted by a network device; transmitting (S320) the first CSI according to the first configuration; determining (S330) a second CSI according to a second set of reference signal; performing (S340) a cell switch with a target candidate cell according to a first information transmitted by the network device; in response to determining that the second CSI does not comprise invalid CSI, transmitting (S360) the second CSI to the target candidate cell; and in response to determining that the second CSI comprises at least one invalid CSI, transmitting (S370) the second CSI comprising at least one CQI corresponding to a lowest index to the target candidate cell.

## Description

### BACKGROUND OF THE INVENTION

### 1. Field of the Invention

The disclosure generally relates to a communication mechanism, in particular, to a method for handling a channel status information (CSI) report and a user equipment (UE).

### 2. Description of Related Art

In fifth-generation (5G) mobile communication systems, user equipment (UE) may perform handover (or cell switch) among multiple cells to maintain service continuity. Compared to Layer 3-based mobility procedures, Layer 1/Layer 2 Triggered Mobility (LTM) offers advantages in terms of reduced handover (or cell switch) latency and interruption time, and is therefore considered a promising low-latency mobility solution. However, in existing LTM procedures, Layer 1 (L1) measurements are limited to those based on Synchronization Signal Blocks (SSBs).

Currently, the SSB-based L1 measurement procedure involves the UE receiving and evaluating SSB signals from multiple cells and reporting a subset of SSB Resource Indicators (SSBRIs) based on signal strength metrics such as Reference Signal Received Power (RSRP). While this provides basic channel quality information, it remains insufficient for accurate and timely channel estimation immediately after cell switching. As a result, downlink modulation and resource allocation may not be optimally adjusted, leading to degradation in User Perceived Throughput (UPT).

Moreover, existing systems do not incorporate measurement of Channel State Information Reference Signals (CSI-RS) into the L1 procedures of LTM, which limits the gNB's ability to obtain accurate channel state information immediately following the cell switch. This limitation negatively impacts the performance of link adaptation and beam management, especially in scenarios involving high mobility or densely deployed multi-cell environments.

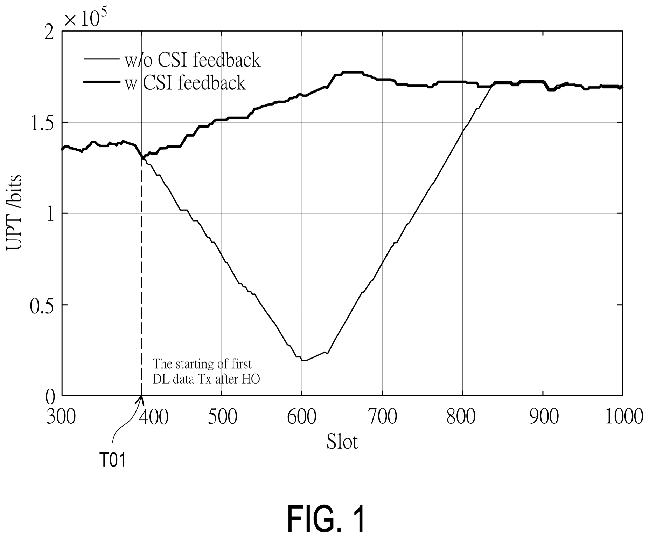

See FIG. 1, which shows a schematic diagram of effects of applying the CSI feedback. In FIG. 1, it is assumed that the UE performs the cell switch operation from the source cell to the target cell at the time point T01.

As can be seen from FIG. 1, if the CSI feedback information (e.g., channel quality indicator (CQI), precoding matrix indicator (PMI), CSI-RS resource indicator (CRI), layer indicator (LI), rank indicator (RI), etc.) associated with the target cell is not available before the cell switch operation, the User Perceived Throughput (UPT) of the UE would experience a great degradation (e.g., about 75%) for a while after the cell switch operation.

On the other hand, if the CSI feedback associated with the target cell is available before the cell switch operation, the UPT of the UE would not experience the same degradation after the cell switch operation.

Accordingly, there is a need for a technical solution that incorporates CSI-RS measurement and reporting into LTM procedures, thereby enabling improved channel state estimation following cell switch and enhancing overall system throughput and user experience.

### SUMMARY OF THE INVENTION

Accordingly, the disclosure is directed to a method for handling a CSI report and a UE, which can be used to solve the above technical problem.

The embodiments of the disclosure provide a method for handling a CSI report used by a UE. The method includes: determining a first CSI according to a first set of reference signal, wherein the first set of reference signal is determined according to a first configuration transmitted by a network device; transmitting the first CSI to the network device according to the first configuration; determining a second CSI according to a second set of reference signal; performing a cell switch with a target candidate cell according to a first information transmitted by the network device; in response to determining that the second CSI does not comprise invalid CSI, transmitting the second CSI to the target candidate cell; and in response to determining that the second CSI comprises at least one invalid CSI, transmitting the second CSI comprising at least one CQI corresponding to a lowest index to the target candidate cell.

The embodiments of the disclosure provide a UE, including a transceiver and a processor. The processor is coupled to the transceiver and configured to perform: determining a first CSI according to a first set of reference signal, wherein the first set of reference signal is determined according to a first configuration transmitted by a network device; controlling the transceiver to transmit the first CSI to the network device according to the first configuration; determining a second CSI according to a second set of reference signal; performing a cell switch with a target candidate cell according to a first information transmitted by the network device; in response to determining that the second CSI does not comprise invalid CSI, controlling the transceiver to transmit the second CSI to the target candidate cell; and in response to determining that the second CSI comprises at least one invalid CSI, controlling the transceiver to transmit the second CSI comprising at least one CQI corresponding to a lowest index to the target candidate cell.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 shows a schematic diagram of effects of applying the CSI feedback.
FIG. 2 shows a functional block diagram of a UE according to an embodiment of the disclosure.
FIG. 3 shows a flow chart of the method for handling a CSI report according to an embodiment of the disclosure.
FIG. 4 shows a schematic diagram of a communication system according to an embodiment of the disclosure.
FIG. 5 shows a schematic diagram of selecting the second set of reference signals according to Option 1 of the disclosure.
FIG. 6 shows a schematic diagram of selecting the second set of reference signals according to Option 1 of the disclosure.
FIG. 7 shows a schematic diagram of selecting the second set of reference signals according to Option 1' of the disclosure.
FIG. 8 shows a schematic diagram of selecting the second set of reference signals according to Option 2 of the disclosure.
FIG. 9A shows a first schematic diagram of selecting the second set of reference signals according to Option 3 of the disclosure.
FIG. 9B shows a second schematic diagram of selecting the second set of reference signals according to Option 3 of the disclosure.
FIG. 10A shows a schematic diagram of selecting the second set of reference signals according to Option 3 of the disclosure.
FIG. 10B shows a schematic diagram of selecting the second set of reference signals according to Option 3 of the disclosure.
FIG. 10C shows a schematic diagram of selecting the second set of reference signals according to Option 3 of the disclosure.
FIG. 11 shows a schematic diagram of applying a threshold value to FIG. 9A according to an embodiment of the disclosure.
FIG. 12A shows a schematic diagram of selecting the second set of reference signals according to Option 3' of the disclosure.
FIG. 12B shows a schematic diagram of selecting the second set of reference signals according to Option 3' of the disclosure.
FIG. 13A shows a schematic diagram corresponding to Scenario 1 according to Option 4 of the disclosure.
FIG. 13B shows a schematic diagram corresponding to Scenario 2 according to Option 4 of the disclosure.
FIG. 13C shows a schematic diagram corresponding to Scenario 3 according to Option 4 of the disclosure.
FIG. 14 shows a schematic diagram of determining whether to perform CSI measurement/report for a candidate RS according to an embodiment of the disclosure.
FIG. 15A shows a schematic diagram of a report configuration corresponding to Scenario 2 according to an embodiment of the disclosure.
FIG. 15B shows a schematic diagram of a report configuration corresponding to Scenario 2 according to an embodiment of the disclosure.
FIG. 16 shows a schematic diagram of configurations for CSI report according to an embodiment of the disclosure.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

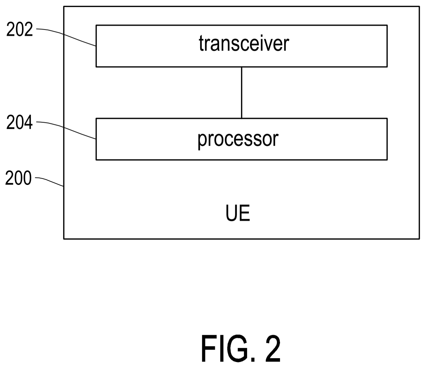

See FIG. 2, which shows a functional block diagram of UE according to an embodiment of the disclosure.

In the embodiments of the disclosure, the UE 200 may be implemented as various types of communication devices. These include smartphones, tablets with cellular connectivity, laptops equipped with 5G modems, and Fixed Wireless Access (FWA) devices. Additionally, UEs may take the form of Internet of Things (IoT) terminals such as smart meters or industrial sensors, vehicle-mounted communication units used in connected or autonomous vehicles, customer premises equipment (CPE), AR/VR headsets with mobile broadband capability, and drones or unmanned aerial vehicles (UAVs) with integrated 5G modules. These devices typically incorporate the necessary protocol stack, physical layer components, and radio interfaces to communicate with 5G network infrastructure.

In FIG. 2, the UE 200 includes a transceiver 202 and a processor 204. The transceiver 202 may be configured for transmitting and receiving signals from other devices within a coverage area thereof. The transceiver 202 is capable of performing analog to digital signal conversion (ADC), digital to analogue signal conversion (DAC), modulation, demodulation, signal amplification, low-pass filtering, and bandpass filtering. For example, the transceiver 202 is configured to provide information on a received signal to the processor 204, modulating data received from the processor 204 into a modulated signal, and transmitting the modulated signal to other devices.

In some embodiments, the UE 200 may further include other elements, such as an antenna module for implementing the aforementioned functions of the transceiver 202 and the processor 204.

The processor 204 may be coupled with the transceiver 202, and the processor 204 may be, for example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like.

In the embodiments of the disclosure, the transmissions/receptions of the UE 200 may be performed by the processor 204 of the UE 200 controlling the transceiver 202 of the UE 200.

In the embodiments of the disclosure, the processor 204 may be configured to perform the method for handling a CSI report proposed by the disclosure, and detailed discussions would be provided in the following.

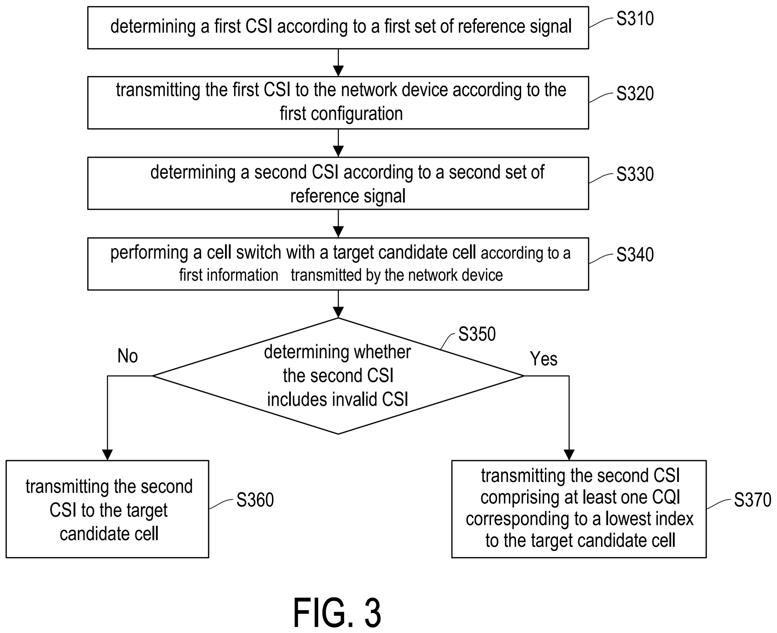

See FIG. 3, which shows a flow chart of the method for handling a CSI report according to an embodiment of the disclosure. The method of this embodiment may be executed by the UE 200 in FIG. 2, and the details of each step in FIG. 3 will be described below with the components shown in FIG. 2.

In step S310, the processor 204 determines a first CSI according to a first set of reference signal, wherein the first set of reference signal is determined according to a first configuration transmitted by a network device.

In the present disclosure, the term "network device" may refer to a device capable of communicating with the UE 200 and providing wireless access or network control functions. The network device may be a fifth-generation (5G) base station (gNB), a Long Term Evolution (LTE) base station (eNB), or functional splits thereof such as a central unit (CU) and a distributed unit (DU). In other embodiments, the network device may also encompass entities within the core network, such as an Access and Mobility Management Function (AMF), a User Plane Function (UPF), or other nodes configured to manage UE mobility and resource allocation. Furthermore, the network device may include infrastructures supporting wireless communications, such as small cells, fixed wireless access (FWA) base stations, or satellite communication gateways. In general, the network device is capable of exchanging control signals and user data with UEs, configuring downlink reference signals, collecting and processing channel state information (CSI), and cooperating with other network nodes to provide stable and efficient communication services, but the disclosure is not limited thereto.

In various embodiments, the first set of reference signal may include a plurality of SSBs and/or CSI-RSs, but the disclosure is not limited thereto.

In some embodiments, the first configuration may be a higher layer configuration included in a higher layer signal (e.g., RRC signaling and/or MAC Control Element (MAC CE), etc.) from the network device.

In one embodiment, the first CSI may include at least one of a plurality of signal resource indicator, a reference signal received power (RSRP), or at least one differential RSRP.

In the embodiment, each of the signal resource indicator may include, but not limited to the CRI and/or SS/PBCH Block Resource Indicator (SSBRI) of the associated reference signal, but the disclosure is not limited thereto.

In one embodiment, the RSRP may be the L1-RSRP of the associated reference signal.

In one embodiment, each differential RSRP may be the difference between the RSRP of the associated reference signal and the RSRP of a specific reference signal among the first set of reference signal.

In one embodiment, each of the first set of reference signal is respectively associated with a candidate cell index.

In one embodiment, the first CSI comprises a first number of different signal resource indicators for each of a second number of candidate cells, wherein the first number and the second number are configured by the higher layer signal. In the embodiment, the second number of the candidate cells may be the total number of the candidate cells, but the disclosure is not limited thereto.

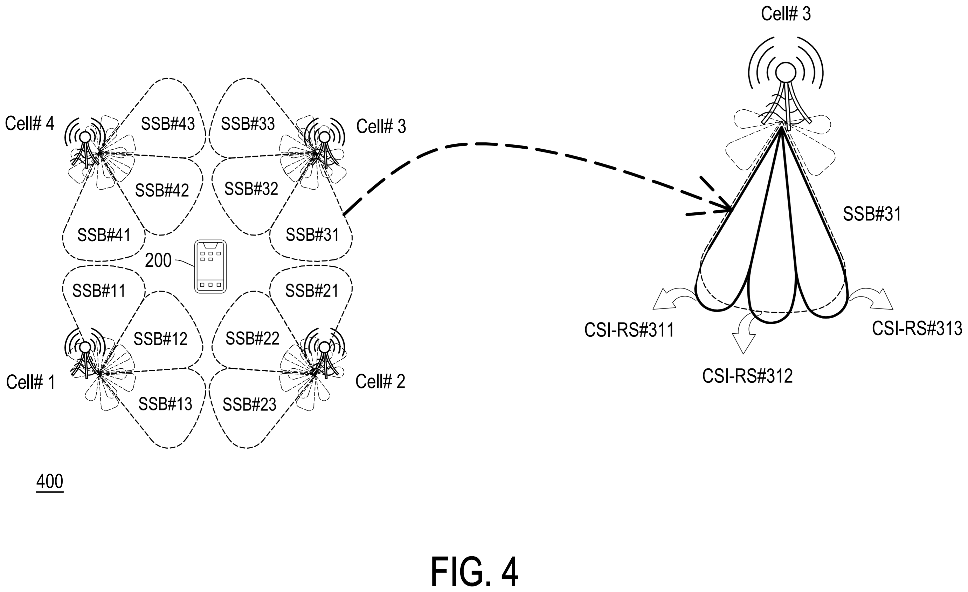

For better understanding the concept of the disclosure, FIG. 4 would be used as an example for following discussions, wherein FIG. 4 shows a schematic diagram of a communication system according to an embodiment of the disclosure.

In FIG. 4, the communication system 400 includes the UE currently served by the corresponding serving cell (not shown) and the associated candidate cells.

In the embodiments of the disclosure, the candidate cells may refer to cells configured by the network device and considered as potential target cells for future handover (or cell switch) of the UE. In the embodiments of the disclosure, the first CSI may be associated with the candidate cells.

For example, as illustrated in FIG. 4, the candidate cells may be denoted as Cell#1 through Cell#4, and together with the serving cell, form a measurement set of the UE 200.

The UE 200 may perform measurements of SSBs or CSI-RSs from the candidate cells according to a measurement configuration provided by the serving cell or the network device, and may generate corresponding CSI reports.

Based on the CSI reported by the UE 200, the network device may determine whether to trigger a cell switch between the UE and one of the candidate cells, thereby ensuring efficient and stable wireless connectivity during UE mobility.

In FIG. 4, each of the candidate cells may transmit the corresponding SSBs.

For example, Cell#1 may transmit SSB#11 to SSB#13; Cell#2 may transmit SSB#21 to SSB#23; Cell#3 may transmit SSB#31 to SSB#33; and Cell#4 may transmit SSB#41 to SSB#43.

In this case, SSB#11 to SSB#13 may be regarded as being associated with the candidate cell index of Cell#1; SSB#21 to SSB#23 may be regarded as being associated with the candidate cell index of Cell#2; SSB#31 to SSB#33 may be regarded as being associated with the candidate cell index of Cell#3; and SSB#41 to SSB#43 may be regarded as being associated with the candidate cell index of Cell#4.

In addition, each SSB may be configured with the corresponding CSI-RSs having a quasi-co-location (QCL) relationship therewith. For example, SSB#31 transmitted by Cell#3 may be configured with three CSI-RSs (denoted by CSI-RS#311 to CSI-RS#313) having QCL relationships with SSB#31, but the disclosure is not limited thereto.

Similar to SSB#31, CSI-RS#311 to CSI-RS#313 can also be regarded as being associated with the candidate cell index of Cell#3, but the disclosure is not limited thereto.

In FIG. 4, the processor 204 may determine the CSI of each SSB and/or the associated CSI-RS.

In one embodiment, the processor 204 may determine (e.g., measure) the SSBRI of each SSB in FIG. 4 as the associated CSI. In addition, the processor 204 may further determine (e.g., measure) the L1-RSRP of each SSB and accordingly determine the associated differential RSRP as the associated CSI.

For example, the processor 204 may subtract the RSRP of SSB#31 from the RSRP of a specific SSB (e.g., the SSB with the highest RSRP) among the SSBs in FIG. 4 to obtain the differential RSRP associated with SSB#31. For another example, the processor 204 may subtract the RSRP of SSB#12 from the RSRP of a specific SSB (e.g., the SSB with the highest RSRP) among the SSBs in FIG. 4 to obtain the differential RSRP associated with SSB#12, but the disclosure is not limited thereto.

In another embodiment, the processor 204 may determine (e.g., measure) the CRI of each CSI-RS in FIG. 4 as the associated CSI. In addition, the processor 204 may further determine (e.g., measure) the L1-RSRP of each CSI-RS and accordingly determine the associated differential RSRP as the associated CSI.

For example, the processor 204 may subtract the RSRP of CSI-RS#311 from the RSRP of a specific CSI-RS (e.g., the CSI-RS with the highest RSRP) among the CSI-RSs in FIG. 4 to obtain the differential RSRP associated with CSI-RS#311. For another example, the processor 204 may subtract the RSRP of CSI-RS#312 from the RSRP of a specific CSI-RS (e.g., the CSI-RS with the highest RSRP) among the CSI-RSs in FIG. 4 to obtain the differential RSRP associated with CSI-RS#312, but the disclosure is not limited thereto.

In some embodiments, the first CSI may include a first number of different signal resource indicators for each of a second number of the candidate cells, wherein the first number and the second number are configured by the higher layer signal.

In the embodiment where SSBs are considered as the first set of reference signals, the first number may be denoted by M, and the second number may be denoted by L'. In the scenario of FIG. 4, M may be 1, 2, or 3, and L' may be 1, 2, 3, or 4, but the disclosure is not limited thereto. In this case, the first CSI may include the signal resource indicators of M SSBs for each of the L' candidate cells.

In one embodiment, the UE 200 may report a UE capability regarding to the maximum value of M and/or L'. The inclusion of current special cell (SpCell) in the L1 measurement report is configurable. In addition, a UE capability may indicate whether inclusion of current SpCell in the L1 measurement report is supported or not.

In the embodiment where CSI-Rs are considered as the first set of reference signals, the first number may be denoted by M', and the second number may be denoted by L". In the scenario of FIG. 4, M' may be 1, 2, or 3, and L" may be 1, 2, 3, or 4, but the disclosure is not limited thereto. In this case, the first CSI may include the signal resource indicators of M' CSI-RSs for each of the L" candidate cells.

In one embodiment, the UE 200 may report a UE capability regarding to the maximum value of M' and/or L". The inclusion of current SpCell in the L1 measurement report is configurable. In addition, a UE capability may indicate whether inclusion of current SpCell in the L1 measurement report is supported or not.

Referring back to FIG. 3, in step S320, the processor 204 may transmit the first CSI to the network device according to the first configuration.

In one embodiment, the first CSI may be transmitted in the form of the associated report.

In the embodiment where the first CSI includes the signal resource indicators of M SSBs for each of the L' candidate cells, the first CSI may be transmitted to the network device in the form of Table 1.

**Table 1**

| CSI fields |
|---|
| SSBRI #1 |
| SSBRI #2 |
| ... |
| SSBRI # L'×M |
| RSRP #1 |
| Differential RSRP #2 |
| ... |
| Differential RSRP # L'×M |

In Table 1, RSRP#1 is the RSRP corresponding to SSBRI#1, and differential RSRP #i (i is 2, 3, ..., or L'xM) is the differential RSRP between RSRP#1 and RSRP#i (for SSBRI#i).

In addition, the bitwidths of the SSBRI, RSRP, and the differential RSRP may be shown in Table 2.

**Table 2**

| Field | Bitwidth |
|---|---|
| SSBRI | Ceil(log₂(K^{SSB})) |
| RSRP | X (e.g., X=7) |
| Differential RSRP | Y (e.g., Y=4) |

In Table 2, K^{SSB} is the configured number of SSBs in the corresponding resource set, Ceil( • ) is the ceiling function, and X and Y are positive integers.

In the embodiment where the first CSI may include the signal resource indicators of M' CSI-RSs for each of the L" candidate cells, the first CSI may be transmitted to the network device in the form of Table 3.

**Table 3**

| CSI fields |
|---|
| CRI #1 |
| CRI #2 |
| ... |
| CRI # L"×M' |
| RSRP #1 |
| Differential RSRP #2 |
| ... |
| Differential RSRP # L"×M' |

In Table 3, RSRP#1 is the RSRP corresponding to CRI#1, and differential RSRP #j (j is 2, 3, ..., or L"xM') is the differential RSRP between RSRP#1 and RSRP#j (for CRI#j).

In addition, the bitwidths of the CRI, RSRP, and the differential RSRP may be shown in Table 4.

**Table 4**

| Field | Bitwidth |
|---|---|
| CRI | Ceil(log₂(K^{CSI-RS})) |
| RSRP | X (e.g., X=7) |
| Differential RSRP | Y (e.g., Y=4) |

In Table 4, K^{CSI-RS} is the configured number of CSI-RS in the corresponding resource set.

In step S330, the processor 204 determines a second CSI according to a second set of reference signal.

In one embodiment, the second CSI may associate with the target candidate cell.

In the embodiments of the disclosure, the second set of reference signal may include at least a part of the first set of reference signal.

In different embodiments, the second set of reference signal may be selected from the first set of refence signal based on different principles, which would be discussed with the following Options.

In Option 1, the processor 204 may select at least one CSI-RS per SSB as the second set of reference signal.

Specifically, for CSI measurement and reporting, the reference signal, such as a CSI-RS, may be selected across multiple configured or activated candidate cells. For example, if there are *L* candidate cells, the processor 204 may select *N* CSI-RSs for each of the *L* cells, thereby forming a total of *K* = *N* × *L* CSI-RSs.

In this case, at least one CSI corresponding to at least one of the *K* CSI-RSs may be obtained or reported in a single CSI report instance.

In some implementations, the processor 204 may select *K* CSI-RSs among the *L* candidate cells, or alternatively, for each of the *L* candidate cells, the processor 204 may select *N* CSI-RSs.

The value of *N* may be fixed (e.g., equal to one) or may be configured by the network device such as a gNB through a higher layer signal.

In certain cases, the processor 204 may assume that the value of *N* is equal to, or not greater than, the number of SSBs, denoted as *M,* which are configured in another CSI report configuration such as an SSB-based L1-RSRP measurement report configuration.

Furthermore, each of the *N* CSI-RSs may be configured or have a QCL relationship with a different transmission configuration indicator (TCI) state or reference signal(s).

Similarly, the value of *L* may also be determined by higher layer signal. For example, the gNB may indicate a list of candidate cell identities, and the value of *L* may be equal to the number of cells included in the indicated list. In another case, the processor 204 may assume that the value of *L* is equal to, or not greater than, the number of cells, denoted as *L',* which are configured in another CSI report configuration such as an SSB-based L1-RSRP measurement report configuration.

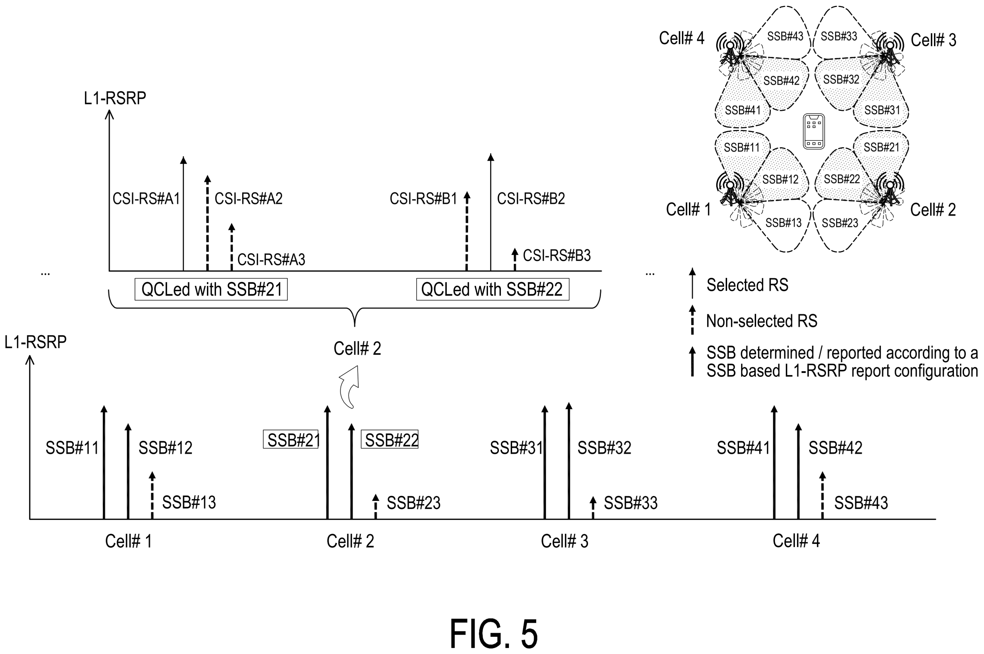

See FIG. 5, which shows a schematic diagram of selecting the second set of reference signal according to Option 1 of the disclosure.

In FIG. 5, the number of candidate cells *L* may be four, and the number of selected CSI-RSs per candidate cell may be two (i.e., N is 2). In this case, the processor 204 may select two CSI-RSs for each of the four candidate cells (i.e., Cell#1 to Cell#4), where each CSI-RS has a QCL relationship with a corresponding SSB.

For example, for Cell #1, two selected CSI-RSs may have QCL relationships with SSB #11 and SSB #12, respectively. For Cell #2, two selected CSI-RSs (e.g., CSI-RS#A1 and CSI-RS#B2) may have QCL relationships with SSB #21 and SSB #22, respectively. For Cell #3, two selected CSI-RSs may have QCL relationships with SSB #31 and SSB #32, respectively. For Cell #4, two selected CSI-RSs may have QCL relationships with SSB #41 and SSB #42, respectively. In this case, the second set of reference signal may include 8 selected CSI-RSs.

In the embodiments of the disclosure, the second CSI of the second set of reference signal may include at least one of signal resource indicator, CQI, PMI, or RI, but the disclosure is not limited thereto. That is, in the scenario of FIG. 5, the second CSI of the second set of reference signal may include at least one of signal resource indicator, CQI, PMI, or RI of each of the 8 selected CSI-RSs, but the disclosure is not limited thereto.

In some implementations, the L1-RSRP of the CSI-RSs may be utilized for selecting the CSI-RSs that have QCL relationships with the same SSB.

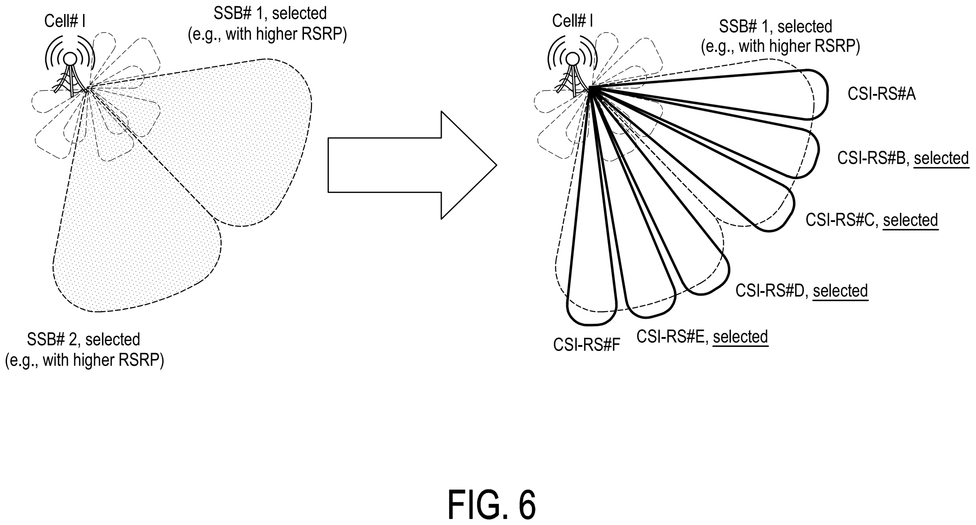

Further discussions of Option 1 may be provided with FIG. 6, wherein FIG. 6 shows a schematic diagram of selecting the second set of reference signal according to Option 1 of the disclosure.

In FIG. 6, for a cell# *l* (*l* is 1, 2, ..., or L), the processor 204 may select N (N=BxK) CSI-RSs from K (e.g., 2) SSBs (e.g., SSB#1 and SSB#2). The processor 204 may select B CSI-RS(s) from each of the K SSBs, wherein the value of B may be a fixed value or indicated by gNB (e.g., via higher layer signal). Each of the N CSI-RSs may have a QCL relationship with one of the K SSBs.

For example, if B is 2, the processor 204 may select 2 CSI-RS(s) from each of the 2 SSBs (e.g., SSB#1 and SSB#2), such as CSI-RS#B and CSI-RS#C having QCL relationships with SSB#1 and CSI-RS#D and CSI-RS#E having QCL relationships with SSB#2, but the disclosure is not limited thereto.

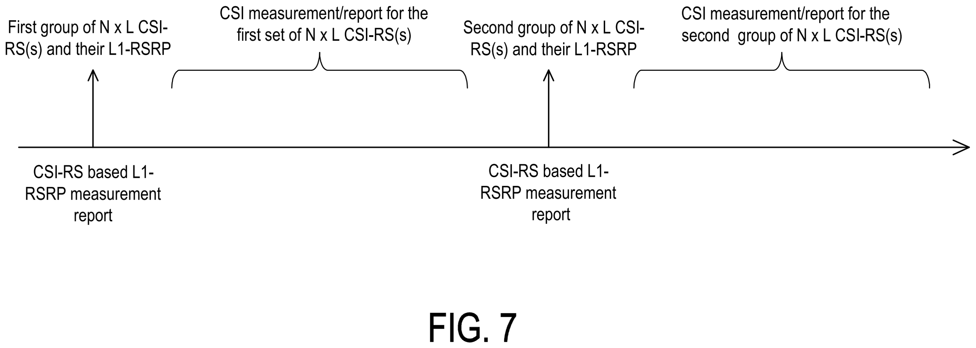

See FIG. 7, which shows a schematic diagram of selecting the second set of reference signal according to Option 1' of the disclosure.

In Option 1', the processor 204 may perform CSI measurement/report for different groups of NxL CSI-RSs at different time points.

For example, as shown in FIG. 7, the processor 204 may firstly perform CSI measurement/report for the first group of NxL CSI-RSs, and then perform CSI measurement/report for the second group of NxL CSI-RSs, wherein the first and second groups of NxL CSI-RSs may include identical or different CSI-RSs, but the disclosure is not limited thereto.

In Option 2, the processor 204 may select at least one CSI-RS per SSB, and select one SSB per candidate cell.

Specifically, for CSI measurement and reporting, the selection of the second set of reference signal (e.g., CSI-RSs) may be performed across *L* cells from configured or activated cells, where *N* CSI-RSs are selected for each of the *L* cells. Thus, a total of *K* = *N* × *L* CSI-RSs may be selected, and the CSI corresponding to the *K* CSI-RSs may be obtained or reported in a single report instance.

The processor 204 may select *K* CSI-RSs among the *L* cells, or alternatively, for each of the *L* cells, the UE may select *N* CSI-RSs. The value of *N* may be a fixed value (e.g., equal to 1) or may be configured by the gNB via higher layer signal.

Each of the *N* CSI-RSs may have a QCL relationship with the same TCI-state or RS. The TCI-state or RS may be associated with an SSB. The SSB may be selected or reported in another CSI report configuration (e.g., an SSB-based L1-RSRP measurement report configuration), such as selecting an SSB with the highest L1-RSRP among SSBs associated with the same cell ID.

The value of *L* may be indicated by a higher layer signal, or may be determined by a gNB indication, such as by providing a list of cell IDs where the value of *L* equals the number of cells in the list. In some cases, the UE may assume that the value of *L* is equal to, or not greater than, the number of cells (e.g., *L'*) configured in another CSI report configuration, such as the SSB-based L1-RSRP measurement report configuration. At least one CSI corresponding to at least one of the *N* × *L* CSI-RSs may be obtained or reported in a single report instance.

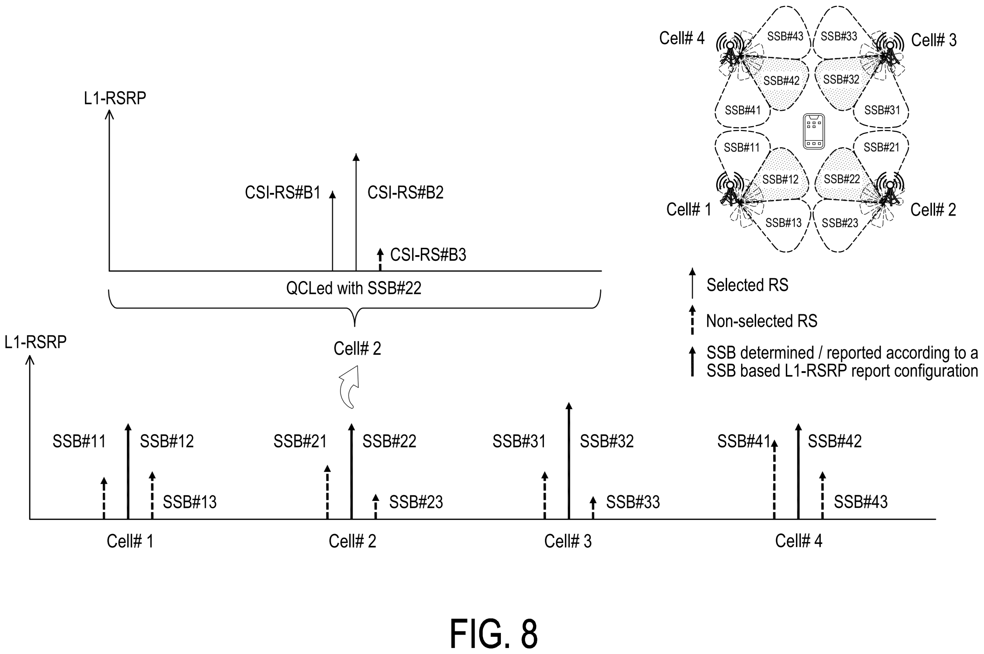

See FIG. 8, which shows a schematic diagram of selecting the second set of reference signal according to Option 2 of the disclosure.

In FIG. 8, when *L* = 4 and *N =* 2, the processor 204 may select two CSI-RSs for each of the four candidate cells (e.g., Cell#1 to Cell#4). For Cell #1, the two selected CSI-RSs may have a QCL relationship with SSB #12. For Cell #2, the two selected CSI-RSs (e.g., CSI-RS#B1 and CSI-RS#B2) may have a QCL relationship with SSB #22. For Cell #3, the two selected CSI-RSs may have a QCL relationship with SSB #32. For Cell #4, the two selected CSI-RSs may have a QCL relationship with SSB #42. In this case, the second set of reference signal may include 8 selected CSI-RSs.

In the embodiments of the disclosure, the second CSI of the second set of reference signal may include at least one of signal resource indicator, CQI, PMI, or RI, but the disclosure is not limited thereto. That is, in the scenario of FIG. 8, the second CSI of the second set of reference signal may include at least one of signal resource indicator, CQI, PMI, or RI of each of the 8 selected CSI-RSs, but the disclosure is not limited thereto.

In Option 3, the processor 204 may select at least one CSI-RS from at least one SSB.

Specifically, for CSI measurement and reporting, the selection of the second set of reference signal (e.g., CSI-RSs) may be performed across *L* cells from configured or activated cells. For example, the processor 204 may select *N* CSI-RSs from one of the *L* candidate cells. At least one CSI corresponding to at least one of the *N* CSI-RSs may be obtained or reported in a single report instance.

The processor 204 may select *N* CSI-RSs from one of the *L* cells, wherein the value of *N* may be a fixed value (e.g., equal to 1) or may be configured by the gNB via a higher layer signal. Each of the *N* CSI-RSs may have a QCL relationship with the same TCI-state or reference signal. The TCI-state or reference signal may be associated with an SSB. The SSB may be selected from a set of SSBs configured in an SSB-based L1-RSRP measurement report configuration. The selected SSB may also be reported in another CSI report, for example, as the SSB having the best quality such as the highest RSRP among SSBs included in that report.

In some implementations, the quality of the selected SSB (e.g., L1-RSRP) may be required to be higher than a threshold value, where the threshold may be configured by a higher layer signal or defined as disclosed in another embodiment.

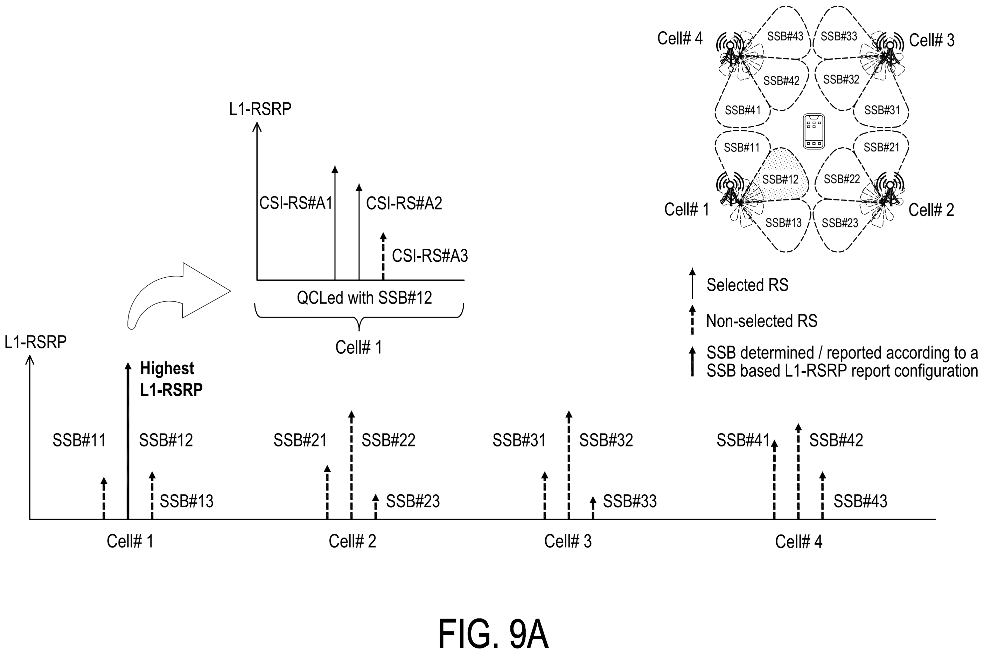

See FIG. 9A, which shows a first schematic diagram of selecting the second set of reference signal according to Option 3 of the disclosure.

In FIG. 9A, when the number of candidate cells *L* is four and the number of selected CSI-RSs per cell *N* is two, *N* CSI-RSs having a QCL relationship with an SSB (e.g., SSB #12) may be selected. For example, CSI-RS#A1 and CSI-RS#A2 having a QCL relationship with SSB#12 may be selected since the L1-RSRP of SSB #12 is higher than the L1-RSRPs of all other SSBs.

For example, the L1-RSRP of CSI-RSs may be used as a basis for selecting CSI-RSs that have a QCL relationship with the same SSB. In addition, the L1-RSRP of CSI-RSs may be used for selecting *N* CSI-RSs among a larger set of *M* CSI-RSs, where *M > N.*

In the scenario of FIG. 9A, the second CSI of the second set of reference signal may include at least one of signal resource indicator, CQI, PMI, or RI of each of CSI-RS#A1 and CSI-RS#A2, but the disclosure is not limited thereto.

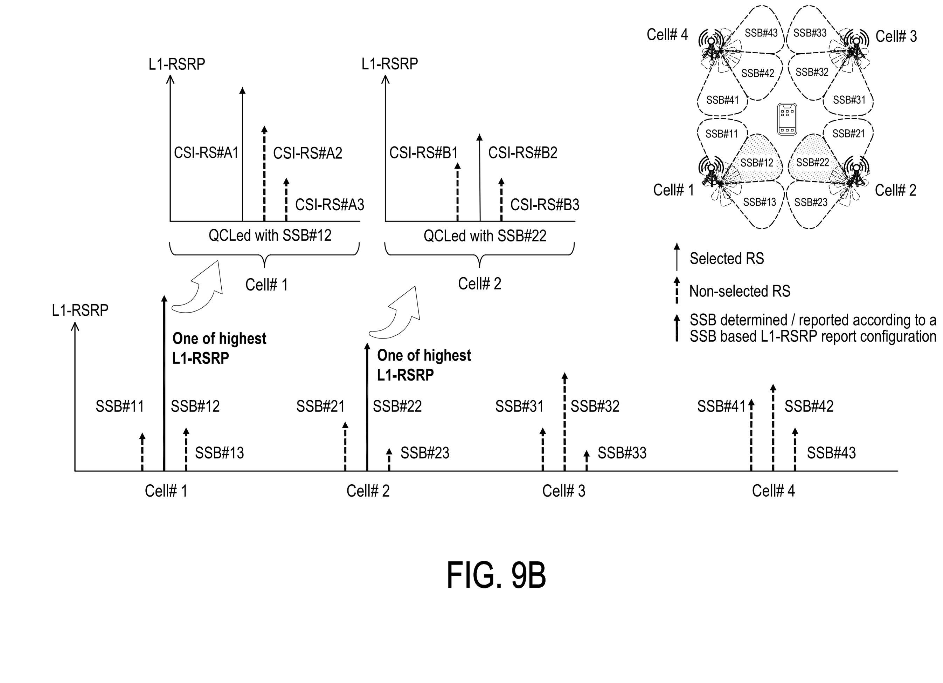

See FIG. 9B, which shows a second schematic diagram of selecting the second set of reference signal according to Option 3 of the disclosure.

In FIG. 9B, when the number of cells *L* is four and the number of CSI-RSs per cell *N* is two, *N* CSI-RSs respectively having a QCL relationship with *N* SSBs (e.g., SSB #12 and SSB #22) may be selected. Since the L1-RSRPs of SSB #12 and SSB #22 are higher than the L1-RSRPs of all other SSBs. In this case, the processor 204 may select one CSI-RS (e.g., CSI-RS#A1) associated with SSB #12 and another CSI-RS (e.g., CSI-RS#B2) associated with SSB #22. The *N* SSBs may, or may not, be restricted to associate with different cell IDs.

For example, the L1-RSRP of CSI-RSs may be used as a basis for selecting CSI-RSs that have a QCL relationship with the same SSB. In addition, the L1-RSRP of CSI-RSs may be used for selecting *N* CSI-RSs among a larger set of *M* CSI-RSs, where *M > N.*

In the scenario of FIG. 9B, the second CSI of the second set of reference signal may include at least one of signal resource indicator, CQI, PMI, or RI of each of CSI-RS#A1 and CSI-RS#A2, but the disclosure is not limited thereto.

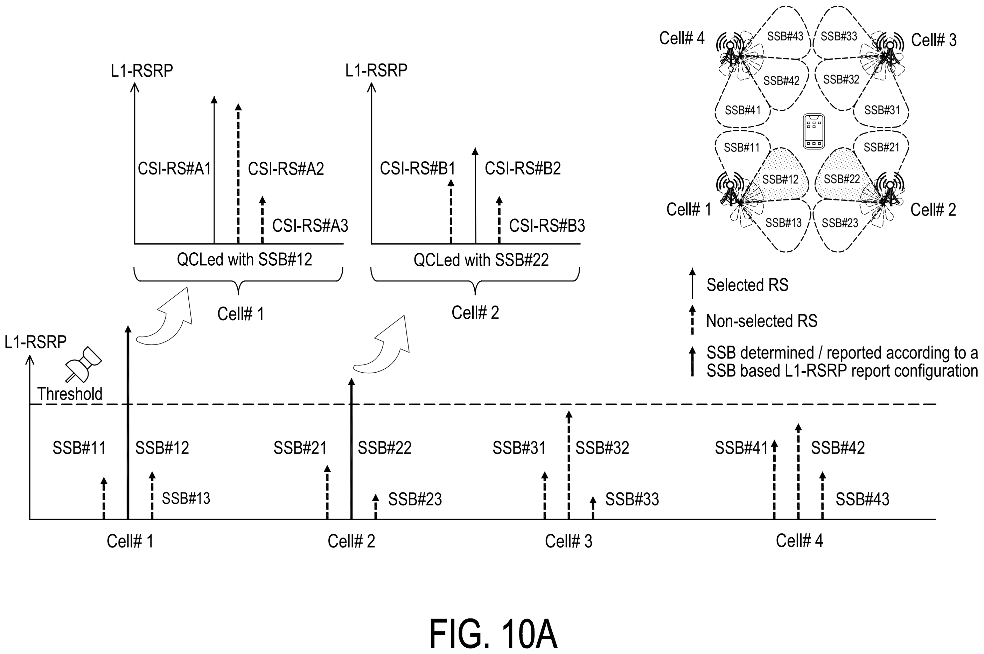

See FIG. 10A to FIG. 10C, which shows different schematic diagrams of selecting the second set of reference signal according to Option 3 of the disclosure.

In FIG. 10A to FIG. 10C, when the number of cells *L* is four and the number of CSI-RSs per cell *N* is two, the processor 204 may select *N* CSI-RSs that have a QCL relationship with at least one SSB. The selection of the CSI-RSs may be performed according to a threshold condition. For example, the UE may select the CSI-RSs only if the L1-RSRP of the associated SSB is higher than a predefined threshold value.

In FIG. 10A, since only the L1-RSRPs of SSB#12 and SSB#22 are higher than the predefined threshold value (indicated by dashed line), the processor 204 may select one CSI-RS (e.g., CSI-RS#A1) associated with SSB #12 and another CSI-RS (e.g., CSI-RS#B2) associated with SSB #22 as the second set of reference signal.

In the scenario of FIG. 10A, the second CSI of the second set of reference signal may include at least one of signal resource indicator, CQI, PMI, or RI of each of CSI-RS#A1 and CSI-RS#B2, but the disclosure is not limited thereto.

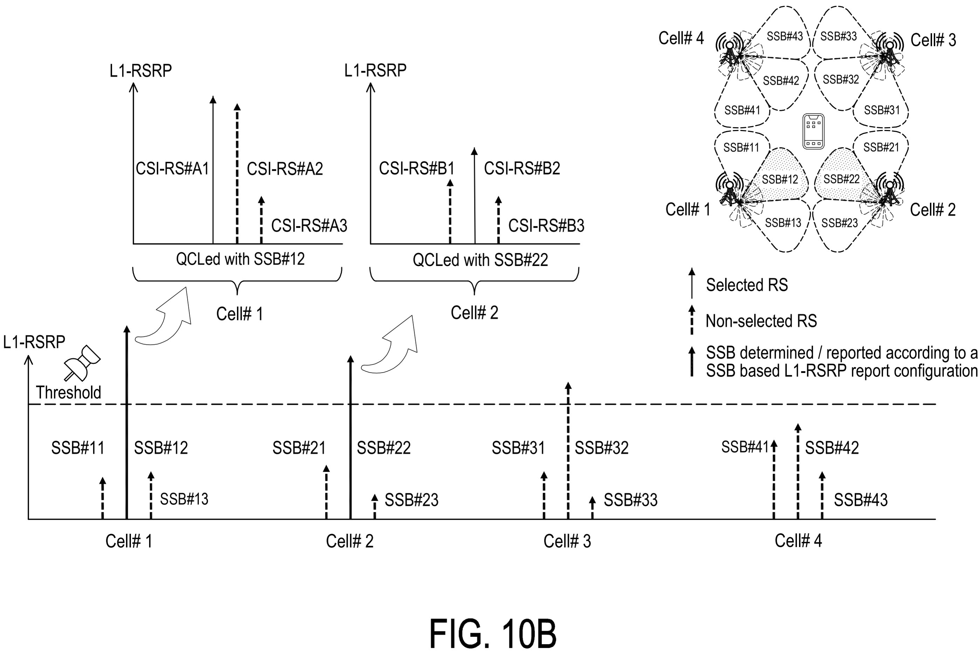

In FIG. 10B, even though the L1-RSRPs of SSB#12, SSB#22, and SSB#32 are all higher than the predefined threshold value (indicated by dashed line), the processor 204 may select 2 (e.g., N) SSBs with the highest L1-RSRPs (e.g., SSB#12 and SSB#22) and accordingly select one CSI-RS having a QCL relationship therewith. For example, the processor 204 may select one CSI-RS (e.g., CSI-RS#A1) associated with SSB #12 and another CSI-RS (e.g., CSI-RS#B2) associated with SSB #22 as the second set of reference signal.

In the scenario of FIG. 10B, the second CSI of the second set of reference signal may include at least one of signal resource indicator, CQI, PMI, or RI of each of CSI-RS#A1 and CSI-RS#B2, but the disclosure is not limited thereto.

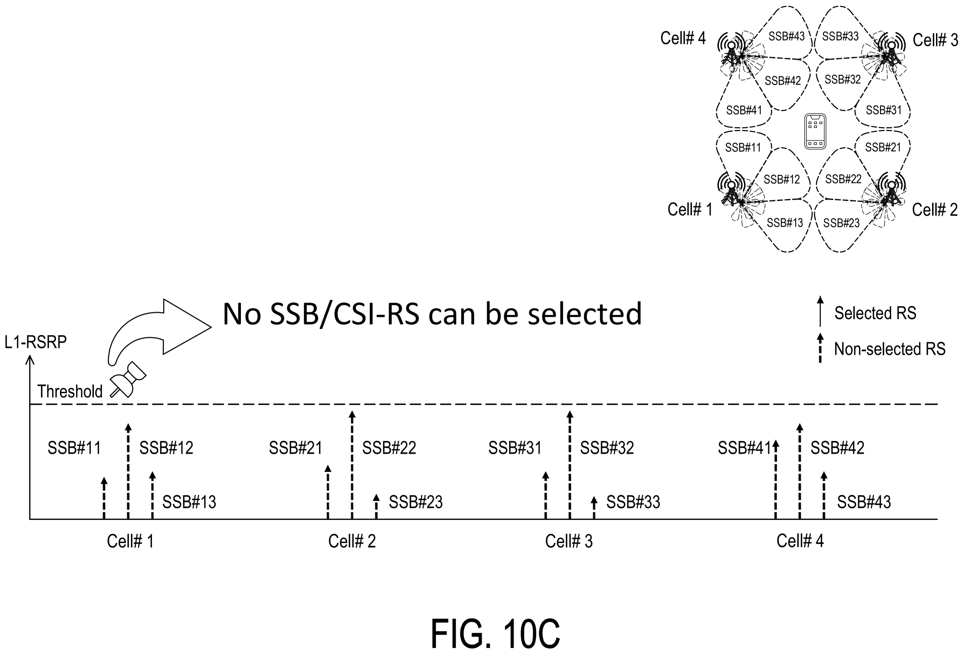

In FIG. 10C, since the L1-RSRPs of all SSBs are lower than the predefined threshold value (indicated by dashed line), the processor 204 may select none of the SSBs, and hence no CSI-RSs associated with the SSBs would be selected as the second set of reference signal, but the disclosure is not limited thereto.

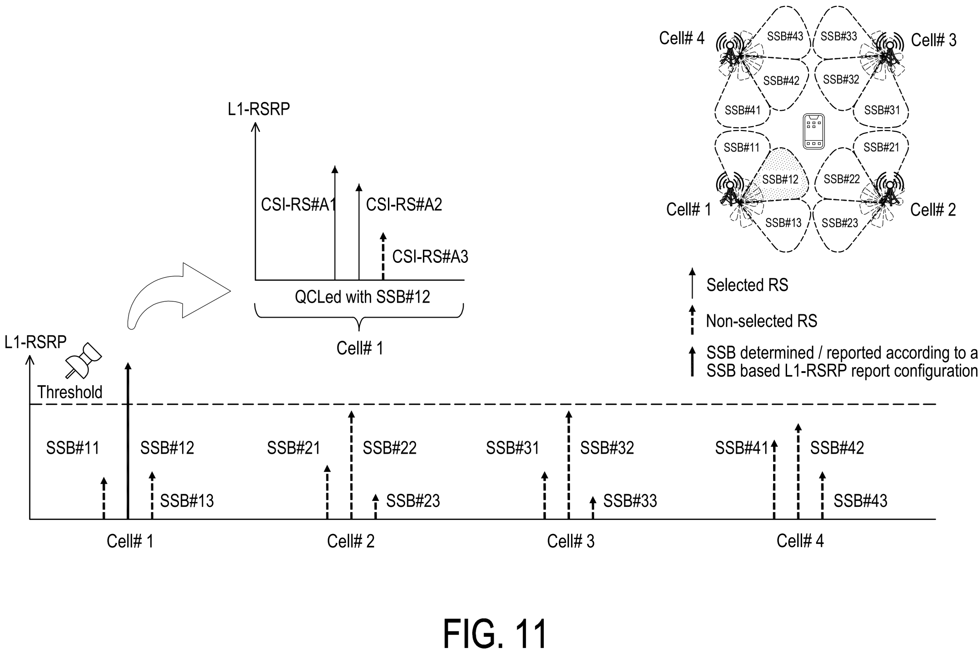

See FIG. 11, which shows a schematic diagram of applying the concept of predefined threshold value to FIG. 9A of the disclosure.

In FIG. 11, since only the L1-RSRP of SSB#12 is higher than the predefined threshold value (indicated by dashed line), the processor 204 may select 2 (e.g., N) CSI-RSs (e.g., CSI-RS#A1 and CSI-RS#A2) having QCL relationship with SSB #12 as the second set of reference signal.

In the scenario of FIG. 11, the second CSI of the second set of reference signal may include at least one of signal resource indicator, CQI, PMI, or RI of each of CSI-RS#A1 and CSI-RS#A2, but the disclosure is not limited thereto.

By applying the threshold value, the UE 200 can ensure that only CSI-RSs associated with sufficiently strong SSBs are selected, thereby improving the reliability of CSI measurement and reporting.

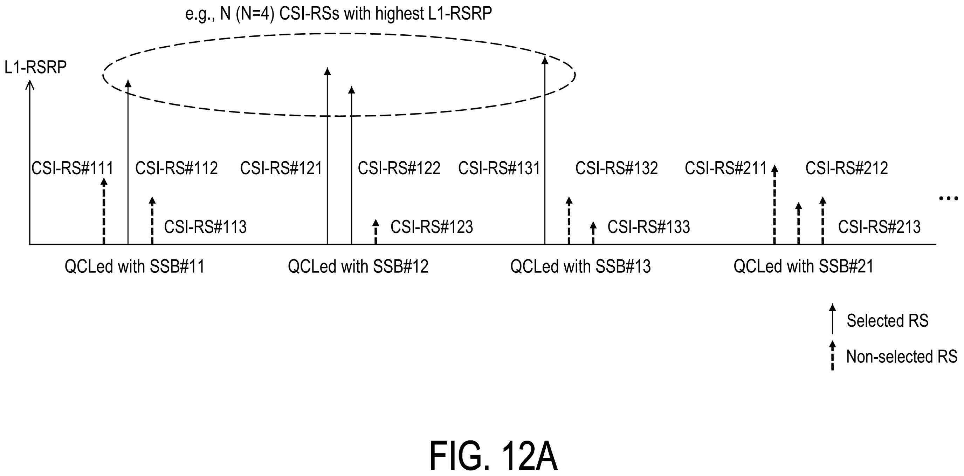

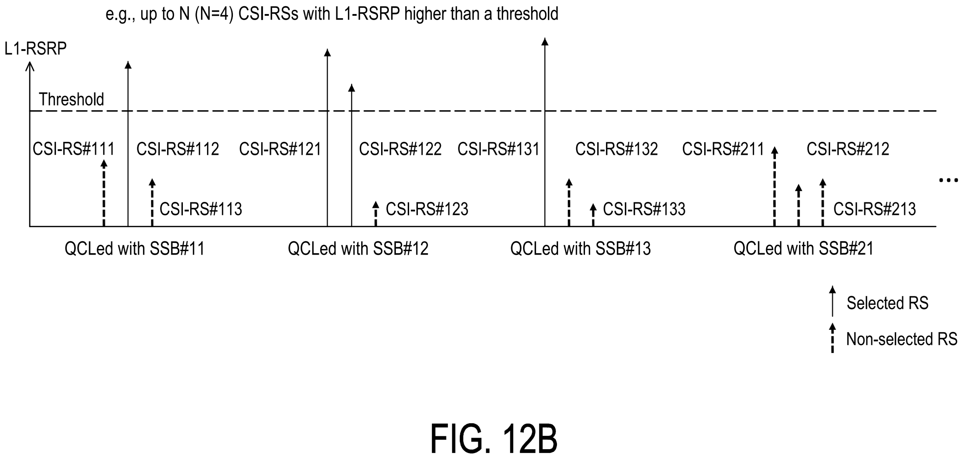

See FIG. 12A and FIG. 12B, which show schematic diagrams of selecting the second set of reference signal according to Option 3' of the disclosure.

In Option 3', for CSI measurement and reporting, the selection of the second set of reference signal (e.g., CSI-RSs) may be performed across *L* cells from configured or activated cells. For example, the processor 204 may select *N* CSI-RSs among the *L* candidate cells, where at least one CSI corresponding to at least one of the *N* CSI-RSs may be obtained or reported in a single report instance. The value of *N* may be a fixed value (e.g., equal to 1) or may be configured by the gNB via higher layer signal.

The processor 204 may select the *N* CSI-RSs among the *L* cells according to various criteria.

In one embodiment, the processor 204 may select the *N* CSI-RSs with the highest L1-RSRP among the CSI-RSs as the second set of reference signal.

For example, in FIG. 12A, it is assumed that N is 4, and hence the processor 204 may select 4 CSI-RSs (e.g., CSI-RS#112, CSI-RS#121, CSI-RS#122, and CSI-RS#131) with the highest L1-RSRP as the second set of reference signal.

In the scenario of FIG. 12A, the second CSI of the second set of reference signal may include at least one of signal resource indicator, CQI, PMI, or RI of each of CSI-RS#112, CSI-RS#121, CSI-RS#122, and CSI-RS#131, but the disclosure is not limited thereto.

In another embodiment, the selection of the second set of reference signal may be performed according to a threshold value, where the threshold value may be determined based on a value configured by the gNB.

For example, in FIG. 12B, it is assumed that N is 4, and hence the processor 204 may select up to 4 CSI-RSs (e.g., CSI-RS#112, CSI-RS#121, CSI-RS#122, and CSI-RS#131) with the L1-RSRP higher than the threshold value (indicated by the dashed line) as the second set of reference signal.

In the scenario of FIG. 12B, the second CSI of the second set of reference signal may include at least one of signal resource indicator, CQI, PMI, or RI of each of CSI-RS#112, CSI-RS#121, CSI-RS#122, and CSI-RS#131, but the disclosure is not limited thereto.

In another case, the threshold value may be determined based on the quality of a third RS. The third RS may be selected from a set of RSs (e.g., of the serving cell), where the selected RS may have the highest or lowest quality (e.g., L1-RSRP) among the set. The set of RSs may be reported or selected according to a gNB configuration, such as an SSB-based L1-RSRP measurement report configuration or a CSI-RS-based L1-RSRP measurement report configuration.

In some implementations, the threshold value may also be determined based on the highest, lowest, or average quality (e.g., L1-RSRP) of the set of RSs of the serving cell, where the set is reported or selected according to the gNB configuration. The same concept may be applied to the threshold value determination as disclosed in other embodiments.

In the embodiments of the disclosure, the second CSI may be associated with a third number of candidate cells and a fourth number of reference signal for each of the third number of candidate cell. In the embodiment, the third number may be L and the fourth number may be N mentioned in the above embodiments.

In different embodiments, scenarios of CSI measurement and reporting (e.g., the CSI measurement and/or report of the second CSI) for multiple candidate cells may be implemented as follows.

In Scenario 1, the CSI-RS measurement and CSI reporting operations are performed before the reception of an LTM Cell Switch Command delivered via a MAC-CE. In this case, the CSI report may be transmitted to the serving cell, which then forwards the report to the candidate or target cell.

In Scenario 2, the CSI-RS measurement may be initiated before the reception of the LTM CSC (cell switch command) MAC-CE, while the CSI reporting operation is performed after the reception of the LTM CSC MAC-CE. In this case, the CSI report is transmitted directly to the target cell.

In Scenario 3, both the CSI-RS measurement and the CSI reporting operations are performed after the reception of the LTM CSC MAC-CE. In this case, the CSI report is also transmitted directly to the target cell.

It is noted that in the present disclosure, the term "measurement/report" denotes measurement and/or report, and may cover implementations where the measurement and reporting procedures are performed together or separately.

In Option 4, the processor 204 may determine the second set of reference signal according to an indication provided by the network device (e.g., the gNB). The indication may be delivered via a DCI (Downlink control information), a MAC-CE, and/or RRC (Radio Resource Control) signaling, and may include at least one of a cell ID, at least one SSB index, and/or at least one CSI-RS resource.

For example, the network device may determine at least one SSB index of a subset of SSBs based on an L1-RSRP report received from the UE 200, where the report may include an L1-RSRP corresponding to the at least one SSB index. After receiving the indication, the processor 204 may perform the CSI measurement according to the indicated information.

Since the processor 204 may perform CSI measurement and reporting by following any of Scenarios 1 to 3, the UE operations associated with the above indication may be carried out in different ways.

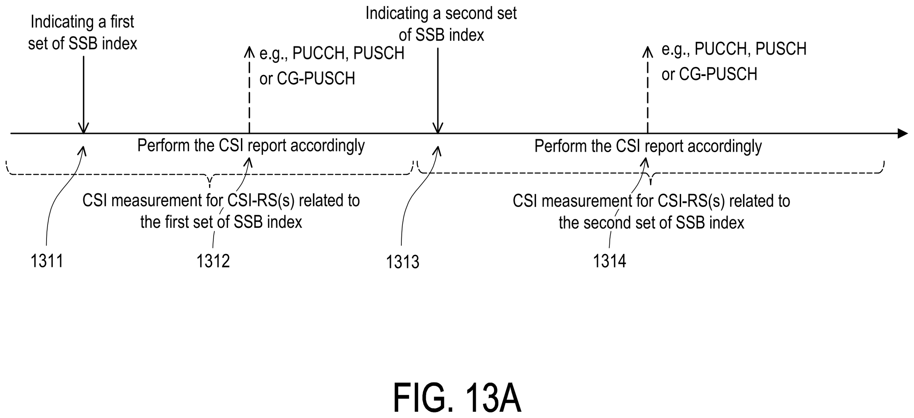

See FIG. 13A, which show a schematic diagram corresponding to Scenario 1 according to Option 4 of the disclosure.

In FIG. 13A, the processor 204 may perform steps S310 and S320, such that the network device may have the information of, for example, the L1-RSRP of the SSBs associated with the candidate cells. Accordingly, the network device may select a first subset of the SSBs and carry a first set of SSB index of the selected first subset of SSBs in a first indication, and transmit the first indication to the UE 200 at the time point 1311.

Therefore, the UE 200 may receive the first indication from the network device at the time point 1311 and accordingly perform the CSI measurement for CSI-RS(s) (e.g., the second set of reference signal) related to the first set of SSB index.

At time point 1312, the UE 200 may perform the CSI report by using physical uplink control channel (PUCCH), physical uplink shared channel (PUSCH) or CG-PUSCH (configured grant PUSCH).

In addition, the network device may select a second subset of the SSBs and carry a second set of SSB index of the selected second subset of SSBs in a second indication, and transmit the second indication to the UE 200 at the time point 1313.

Therefore, the UE 200 may receive the second indication from the network device at the time point 1313 and accordingly perform the CSI measurement for CSI-RS(s) (e.g., the second set of reference signal) related to the second set of SSB index.

At time point 1314, the UE 200 may perform the CSI report by using PUCCH, PUSCH or CG-PUSCH.

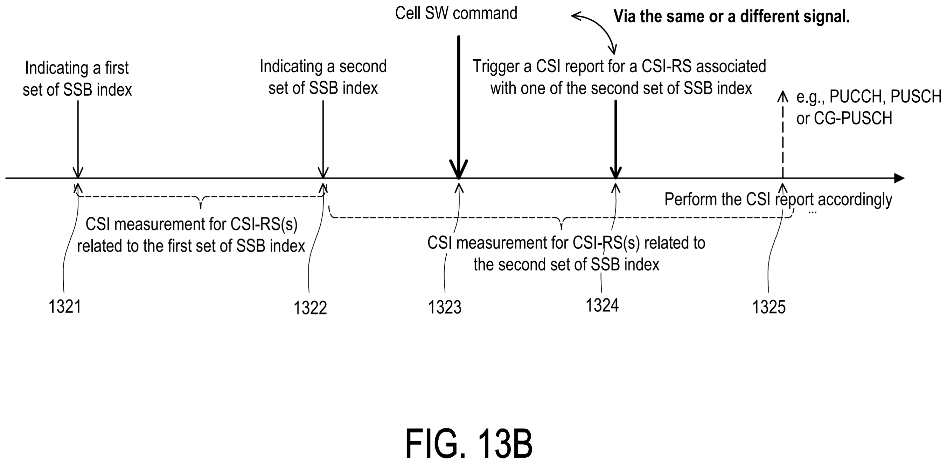

See FIG. 13B, which show a schematic diagram corresponding to Scenario 2 according to Option 4 of the disclosure.

In FIG. 13B, the processor 204 may perform steps S310 and S320, such that the network device may have the information of, for example, the L1-RSRP of the SSBs associated with the candidate cells. Accordingly, the network device may select a first subset of the SSBs and carry a first set of SSB index of the selected first subset of SSBs in a first indication, and transmit the first indication to the UE 200 at the time point 1321.

Therefore, the UE 200 may receive the first indication from the network device at the time point 1321 and accordingly perform the CSI measurement for CSI-RS(s) (e.g., the second set of reference signal) related to the first set of SSB index.

In addition, the network device may select a second subset of the SSBs and carry a second set of SSB index of the selected second subset of SSBs in a second indication, and transmit the second indication to the UE 200 at the time point 1323.

Therefore, the UE 200 may receive the second indication from the network device at the time point 1322 and accordingly perform the CSI measurement for CSI-RS(s) (e.g., the second set of reference signal) related to the second set of SSB index.

In FIG. 13B, it is assumed that the UE 200 receives the cell switch command at the time point 1323, wherein the cell switch command may indicate the UE 200 to switch to a cell comprising at least one of the second set of SSB index.

At the time point 1324, the network device may trigger a CSI report for a CSI-RS associated with one of the second set of SSB index. In the embodiment, the network device may use the cell switch command to trigger the CSI report of the UE 200, but the disclosure is not limited thereto.

At the time point 1325, the UE 200 may perform the CSI report by using PUCCH, PUSCH or CG-PUSCH.

From another perspective, Scneario 2 can be regarded as the situation where the second CSI is transmitted to the target candidate cell using a first PUSCH after receiving the second information.

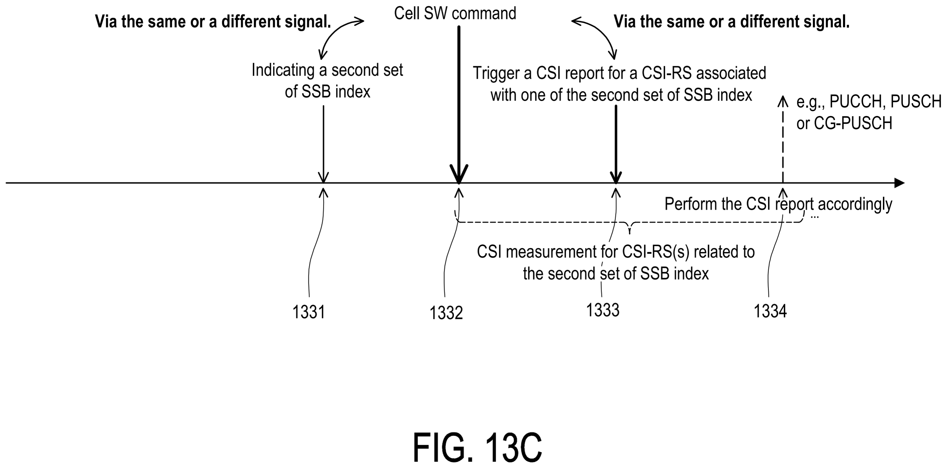

See FIG. 13C, which show a schematic diagram corresponding to Scenario 3 according to Option 4 of the disclosure.

In FIG. 13C, the processor 204 may perform steps S310 and S320, such that the network device may have the information of, for example, the L1-RSRP of the SSBs associated with the candidate cells. Accordingly, the network device may select a subset of the SSBs and carry a set of SSB index of the selected subset of SSBs in an indication, and transmit the indication to the UE 200 at the time point 1331.

In FIG. 13C, it is assumed that the UE 200 receives the cell switch command at the time point 1332, wherein the cell switch command may indicate the UE 200 to switch to a cell comprising at least one of the set of SSB index.

At the time point 1333, the network device may trigger a CSI report for a CSI-RS associated with one of the second set of SSB index. In the embodiment, the network device may use the cell switch command to trigger the CSI report of the UE 200, but the disclosure is not limited thereto.

At the time point 1334, the UE 200 may perform the CSI report by using PUCCH, PUSCH or CG-PUSCH.

Referring back to FIG. 3, in step S340, the processor 204 performs a cell switch with a target candidate cell according to a first information transmitted by the network device.

In the embodiments of the disclosure, the first information may be the cell switch command, which may include at least one of a target cell identity, an SSB index, and/or a CSI-RS resource associated with the target candidate cell. Upon receiving the first information, the processor 204 may control the transceiver 202 of the UE 200 to release the connection with the serving cell and establish a connection with the target candidate cell. By performing the cell switch based on the CSC, the UE is able to maintain continuous connectivity and minimize interruption time during mobility.

In one embodiment, the second set of reference signal may be determined according to a second information, which may be, for example, the indications mentioned in FIG. 13A to FIG. 13C.

In one embodiment, the first information and the second information may be transmitted by the same information by the network device, which may be regarded as corresponding to the scenario of FIG. 13C, but the disclosure is not limited thereto.

In one embodiment, the second information is associated with the first CSI, and the second information is associated with at least one of cell identity and the signal resource indicators. The associated details may be referred to the descriptions of FIG. 5 to FIG. 13C, which would not be repeated herein.

In step S350, the processor 204 determines whether the second CSI includes invalid CSI.

In one embodiment, for a CSI-RS (e.g., identified by a CRI) selected for CSI measurement and reporting, the processor 204 may determine whether to calculate the CSI for the CSI-RS according to the quality of a reference signal (RS) and/or an indication provided by the gNB.

The processor 204 may determine the CSI for the CSI-RS if the quality of the RS, such as an RSRP value, is higher than a threshold, and/or if the gNB explicitly indicates that the CSI measurement is enabled. Otherwise, the processor 204 may not determine the CSI for the CSI-RS.

The RS used for the decision may be the CSI-RS itself or a second RS (e.g., an SSB) that has a QCL relationship with the CSI-RS. The threshold for determining whether CSI should be calculated may be established in various ways. For example, the threshold may be a value configured directly by the gNB. Alternatively, the threshold may be derived from the quality of a third RS. The third RS may be selected from a set of RSs of the serving cell, and the selection may be based on the highest or lowest quality (e.g., RSRP) within the set. The set of RSs may be reported or selected according to a gNB configuration, such as an SSB-based L1-RSRP measurement report configuration or a CSI-RS-based L1-RSRP measurement report configuration. In another implementation, the threshold may be determined according to the highest, lowest, or average quality (e.g., RSRP) of the set of RSs of the serving cell, where the set is likewise reported or selected according to a gNB configuration.

In one embodiment, for a CSI report, if the number of CSI-RSs (e.g., *K* ≥ *0*) selected for the report is less than the number of CSI-RSs (e.g., *N*) configured for the report, the remaining *(N - K)* CSI-RSs may be determined according to the UE implementation. For such remaining CSI-RSs, the CQI index may be set to a default value, for example, a CQI index equal to zero. In this case, the CSI of corresponding CSI-RS may be treated as an invalid CSI.

Accordingly, the CQI table may be adjusted to be the form of Table 5.

**Table 5**

| CQI index | modulation | code rate x 1024 | efficiency |
|---|---|---|---|
| 0 | out of range | | |
| 1 | QPSK | 78 | 0.1523 |
| 2 | QPSK | 120 | 0.2344 |
| 3 | QPSK | 193 | 0.3770 |
| 4 | QPSK | 308 | 0.6016 |
| 5 | QPSK | 449 | 0.8770 |
| 6 | QPSK | 602 | 1.1758 |
| 7 | 16QAM | 378 | 1.4766 |
| ... | | | |
| 15 | 64QAM | 948 | 5.5547 |

In another embodiment, for a CSI report, if no CSI-RS can be selected for the report, the UE may ignore or drop the CSI report. For example, this situation may occur when the L1-RSRP of all candidate CSI-RSs is lower than a threshold, or when there is another uplink control information (UCI) colliding with the CSI report.

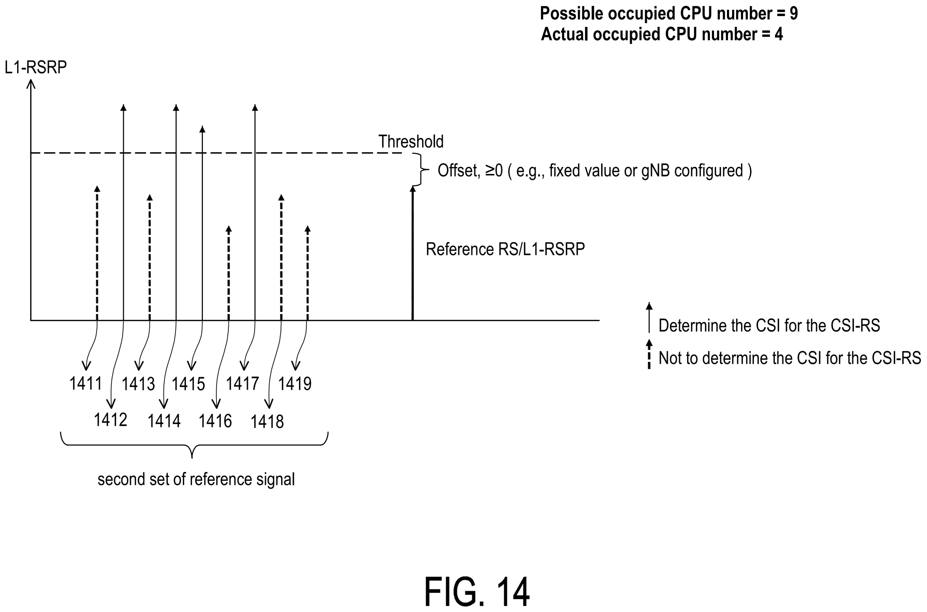

See FIG. 14, which shows a schematic diagram of determining whether to perform CSI measurement/report for a candidate RS according to an embodiment of the disclosure.

In FIG. 14, it is assumed that the second set of reference signal include 9 reference signals 1411 to 1419, where only the reference signals 1412, 1414, 1415, 1417 have the L1-RSRP higher than the threshold value (indicated by dashed line). In this case, the processor 204 may only determine the second CSI (e.g., PMI, CQI, RI, etc.) of the reference signals 1412, 1414, 1415, 1417 whose L1-RSRPs are higher than the threshold value. That is, the processor 204 may determine the second CSI of the reference signals 1411, 1413, 1416, 1418, 1419 (whose L1-RSRPs are lower than the threshold value) are invalid CSI, and not to determine the actual second CSI (e.g., the actual PMI, CQI, RI, etc.) of reference signals 1411, 1413, 1416, 1418, 1419.

In this case, the processor 204 may determine the second CSI of the reference signals 1411, 1413, 1416, 1418, 1419 as a default value.

For example, since the CQI of the reference signals 1411, 1413, 1416, 1418, 1419 are not actually determined by the processor 204, the processor 204 may determine the CQI of the reference signals 1411, 1413, 1416, 1418, 1419 to be corresponding to CQI index 0, which may be regarded as the CQI corresponding to a lowest index, but the disclosure is not limited thereto.

In the scenario of FIG. 14, since the second CSI includes invalid CSI, the processor 204 may proceed to perform step S370 to transmit the second CSI comprising at least one CQI corresponding to a lowest index to the target candidate cell.

In another embodiment, if the second CSI does not include invalid CSI, the processor 204 may proceed to perform step S360 to transmit the second CSI to the target candidate cell.

For example, if the L1-RSRPs of the reference signals 1411 to 1419 are all higher than the threshold value, the processor 204 may determine the second CSI (i.e., the actual CQI, PMI, RI, etc.) of the reference signals 1411 to 1419, and hence no invalid second CSI would be determined. Accordingly, the second CSI transmitted to the network device would not include any CQI corresponding to the lowest index, which means that the CQI index transmitted in the second CSI would be higher than the lowest index, but the disclosure is not limited thereto.

In one embodiment, the CSI corresponding to *N* × *L* CSI-RSs may be reported in a single report instance. The CSI may be determined according to a rank value, such as rank 1, which may be specified by a higher layer configuration (e.g., an RI restriction) or determined based on the number of antenna ports of the CSI-RS. The CSI may include a set of CRIs, a set of CQIs corresponding to the set of CRIs, and/or a set of RI, PMI, LI, wideband indicator (also referred to as "i1"), or capacity index values corresponding to the set of CRIs.

In one embodiment, the CSI may be reported by using the following Table 6 or Table 7.

**Table 6**

| CSI fields |
|---|
| CRI #1 |
| CRI #2 |
| ... |
| CRI # L×N |
| CQI #1 |
| CQI #2 |
| ... |
| CQI # L×N |

**Table 7**

| CSI fields |
|---|
| CRI #1 |
| CRI #2 |
| ... |
| CRI # L×N |
| CQI #1 |
| Differential CQI #2 |
| ... |
| Differential CQI # L×N |

In Table 6 and Table 7, CQI#1 is the CQI of CRI#1, and differential CQI#k (k is 2, 3, ..., or LxN) is the differential CQI between CQI#1 and CQI#k.

In one embodiment, the differential CQI value and the corresponding offset level may be characterized by the following Table 8.

**Table 8**

| Differential CQI value | Offset level |
|---|---|
| 0 | 0 |
| 1 | 1 |
| 2 | ≥2 |
| 3 | ≤-1 |

In one embodiment, the CSI corresponding to *N* CSI-RSs may be reported in a single report instance. The CSI may be determined according to a rank value, such as rank 1, which may be specified by a higher layer configuration (e.g., an RI restriction) or determined based on the number of antenna ports of the CSI-RS. The CSI may include a set of CRIs, a set of CQIs corresponding to the set of CRIs, and/or a set of RI, PMI, LI, wideband indicator, or capacity index values corresponding to the set of CRIs.

In one embodiment, the CSI may be reported by using the following Table 9 or Table 10.

**Table 9**

| CSI fields |
|---|
| CRI #1 |
| CRI #2 |
| ... |
| CRI # N |
| CQI #1 |
| CQI #2 |
| ... |
| CQI # N |

**Table 10**

| CSI fields |
|---|
| CRI #1 |
| CRI #2 |
| ... |
| CRI # N |
| CQI #1 |
| Differential CQI #2 |
| ... |
| Differential CQI # N |

In Table 9 and Table 10, CQI#1 is the CQI of CRI#1, and differential CQI#m (m is 2, 3, ..., or N) is the differential CQI between CQI#1 and CQI#m.

In one embodiment, the differential CQI value and the corresponding offset level may be also characterized by the above Table 8.

In another embodiment where a single report instance includes the CSI of N CSI-RSs, the UE 200 may be configured with a report quantity (e.g., reportQuantity), which may be characterized by cri-RSRP-CQI, cri-RSRP-RI-CQI, cri-RSRP-RI-PMI-CQI, SSB-index-RSRP-CRI-CQI, SSB-index-RSRP-CRI-RI-CQI or SSB-index-RSRP-CRI-RI-PMI-CQI.

In one embodiment, the CSI of the embodiment where the report quantity is characterized by cri-RSRP-CQI may be exemplarily shown in Table 11, and the CSI of the embodiment where the report quantity is characterized by SSB-index-RSRP-CRI-CQI may be exemplarily shown in Table 12.

**Table 11**

| CSI fields |
|---|
| CRI #1 |
| CRI #2 |
| ... |
| CRI # L'×M |
| RSRP #1 |
| Differential RSRP #2 |
| ... |
| Differential RSRP # L'×M |
| CQI (e.g., corresponds to CRI #1) |

**Table 12**

| CSI fields |
|---|
| SSBRI #1 |
| SSBRI #2 |
| ... |
| SSBRI # L'×M |
| RSRP #1 |
| Differential RSRP #2 |
| ... |
| Differential RSRP # L'×M |
| CRI (e.g., corresponds to SSBRI #1) |
| CQI (e.g., corresponds to the CRI) |

In Table 12, the bitwidth may be configured by gNB or the maximum number of CSI-RS resources having QCL relationships with a SSB.

In one embodiment, the L1-RSRP of corresponding CSI-RS may be replaced by CQI/RI/PMI/i1, if transmitted together with L1-RSRP. For example, if N=1, the CSI of the embodiment where the report quantity is characterized by cri-RSRP-CQI may be exemplarily shown in Table 13.

**Table 13**

| CSI fields |
|---|
| CRI #1 |
| CRI #2 |
| ... |
| CRI # L'×M |
| CQI (e.g., corresponds to CRI #1) |
| RSRP #2 (e.g., corresponds to CRI #2) |
| Differential RSRP #3 |
| ... |
| Differential RSRP # L'×M |

In Table 13, RSRP#2 is the RSRP of CRI#2, and Differential RSRP #3 is differential RSRP between RSRP#2 and RSRP#3 (for CRI#3).

In the embodiments of the disclosure, Table 9 to Table 13 may be understood as corresponding to Scenario 1 in the above, but the disclosure is not limited thereto.

For a CSI report configuration (e.g., LTM-CSI-ReportConfig) in Scenario 2 (e.g., CSI-RS measurement can start before reception of LTM CSC MAC-CE and CSI reporting operation is performed after reception of LTM CSC MAC-CE), the UE 200 may be configured by the network device (e.g., gNB) a time domain behavior (e.g., indicated by *Itm-reportConfigType),* indicating a reporting type other than 'aperiodic', 'semiPersistentOnPUCCH', 'semiPersistentOnPUSCH' and 'periodic'.

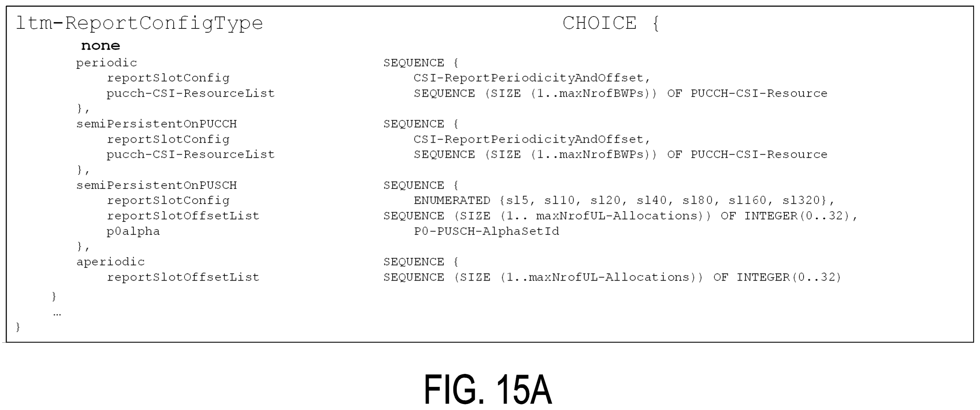

See FIG. 15A, which shows a schematic diagram of a report configuration corresponding to Scenario 2 according to an embodiment of the disclosure.

In FIG. 15A, the report type may indicate 'none'. In this case, the UE 200 may determine the CSI for corresponding CSI-RS resource(s) according to configured report quantity (e.g., cri-RI-PMI-CQI or cri-RI-CQI) without CSI reporting.

In detail, since the current system specification does not define the operation of merely performing CSI measurement but not performing CSI reporting, the report type of 'none' may be newly added to ltm-ReportConfigType for defining this operation.

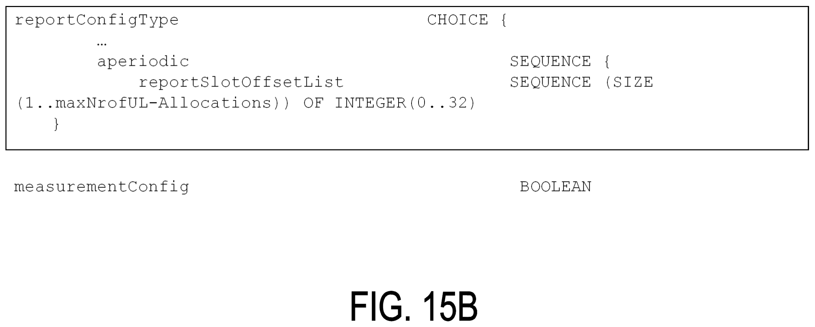

See FIG. 15B, which shows another schematic diagram of a report configuration corresponding to Scenario 2 according to an embodiment of the disclosure.

In FIG. 15B, the UE 200 may be configured by the network device (e.g., gNB) with a time domain behavior, for example, indicated by an *Itm-reportConfigType.* The *ltm-reportConfigType* may be set to "aperiodic," "semiPersistentOnPUCCH," "semiPersistentOnPUSCH," or "periodic." For example, when the configuration is set to "aperiodic," the UE 200 may be further configured by the gNB with a measurement behavior, such as a *measurementConfig,* indicating that the UE may perform a CSI measurement event if there is no corresponding CSI report triggered or activated.

For example, the UE 200 may be configured with a measurement periodicity (e.g., X ms/slot/subframe). The UE 200 may perform at least one CSI measurement for at least one CSI-RS (e.g., in the second set of CSI-RS) within the measurement periodicity.

From another perspective, FIG. 15B can be regarded as the situation where the second CSI is carried in a CSI report, and the CSI report is configured as aperiodic.

In one embodiment, the UE 200 may transmit capability information to the network device, such as a network device (e.g., gNB). The capability information may indicate whether the UE 200 supports CSI measurement and reporting for LTM, for example, including at least one of CQI, RI, and PMI. The capability information may further indicate whether the UE 200 supports CSI-RS based L1-RSRP measurement and reporting for LTM.

The capability information may also comprise resource limitations and performance constraints of the UE 200. For example, the UE 200 may report a number of CPUs (CSI processing units) available for performing LTM-based CSI measurement and reporting, a maximum number of candidate cells that may be supported for LTM-based CSI measurement and reporting, and a maximum number of CSI-RSs per cell or per SSB that may be supported for LTM-based CSI measurement and reporting.

In addition, the capability information may indicate whether the UE 200 supports LTM-based CSI reporting with report quantities related to at least one of RI, CQI, PMI, LI, and i1. For example, the UE 200 may indicate whether it supports LTM-based CSI reporting with report quantities related to semi-open-loop CSI, CSI reporting without PMI (e.g., *csi-ReportWithoutPMI*)*,* or CSI reporting without CQI (e.g., *csi-ReportWithoutCQI*)*.*

In various embodiment, the capability information comprises at least one of following: (1) whether the UE supports a first CSI measurement and a first CSI report associated with the first CSI for at least one candidate cell; (2) whether the UE supports a second CSI measurement and a second CSI report associated with the second CSI for the at least one candidate cell; (3) the second CSI measurement is performed before or after receiving a cell switch command; (4) a maximum number of candidate cells for the first CSI measurement or the second CSI measurement; (5) a maximum number of reference signal per cell or per SSB for the first CSI measurement or the second CSI measurement; (6) capability regarding at least one of RI, CQI, PMI and a wideband indication; or (7) whether inclusion of a current SpCell in the first CSI report is supported.

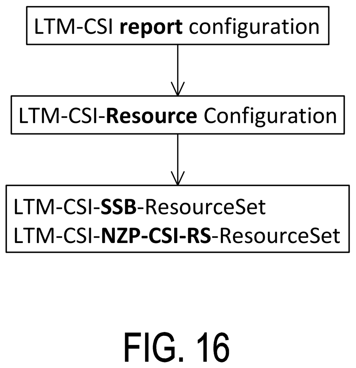

See FIG. 16, which shows a schematic diagram of configurations for CSI report according to an embodiment of the disclosure.

In FIG. 16, the UE 200 may be configured by higher layers with at least one reporting setting (e.g., *LTM-CSI-ReportConfig*) and/or at least one resource setting (e.g., *LTM-CSI-ResourceConfig*)*.* A reporting setting may be associated with a corresponding resource setting for channel measurement and may include various parameters. For example, the reporting setting may comprise a time-domain behavior (e.g., indicated by *ltm-reportConfigType*)*,* which may be set to "aperiodic," "semiPersistentOnPUCCH," "semiPersistentOnPUSCH," or "periodic." For periodic and semi-persistent CSI reporting, the configured periodicity and slot offset apply in the numerology of the UL BWP in which the CSI report is transmitted. The reporting setting may further include the number of cells (e.g., *noOfReportedCells*) and the number of reference signals per cell (e.g., *noOfReportedRSPerCell*)*,* as well as an indication (e.g., *SpCelllnclusion*) of whether the UE 200 shall include a measurement report associated with the current SpCell.

In another embodiment, the UE 200 may be configured by higher layers with at least one resource setting (e.g., *LTM-CSI-ResourceConfig*)*.* A resource setting may contain an SSB resource set (e.g., *LTM-CSI-SSB-ResourceSet*)*,* which may comprise a list of *Z1* ≥ *1* SS/PBCH block indices (e.g., *LTM-CSI-SSB-ResourceList*) and a list of *Z1* PCI indices (e.g., *LTM-Candidateld-list*) referring to cells associated with the SS/PBCH block indices. The UE 200 may determine the time-domain behavior of an SS/PBCH block, such as periodicity and/or position in a burst, from *ssb-Periodicity* and/or *ssb-PositionsInBurst.* The frequency-domain behavior, such as sub-carrier spacing and/or frequency location, may be determined from higher layer parameters such as *subcarrierSpacing* and/or *ssbFrequency.*

In another embodiment, a resource setting (e.g., *LTM-CSI-ResourceConfig*) may comprise a CSI-RS resource set (e.g., *LTM-CSI-NZP-CSI-RS-ResourceSet*)*.* This set may include a list of *Z2 ≥ 1* CSI-RS indices (e.g., *ltm-CSI-NZP-CSI-RS-ResourceList*) and a list of Z2 PCI indices (e.g., *LTM-Candidateld-list*) referring to cells associated with the CSI-RS indices. The UE 200 may determine a TCI-state for a CSI-RS resource, where each TCI-state contains parameters for configuring a QCL relationship between one (or two) DL RSs and the CSI-RS ports of the CSI-RS resource. The QCL relationship may be configured using higher layer parameters, such as *qcl-Type1* for the first DL RS and *qcl-Type2* for the second DL RS. When two DL RSs are configured, the QCL types shall not be the same, regardless of whether the references are to the same or different DL RSs.

The QCL types corresponding to each DL RS may be given by the higher layer parameter *qcl-Type* in *QCL-Info,* and may take one of the following values: (1) "typeA": {Doppler shift, Doppler spread, average delay, delay spread}; (2) "typeB": {Doppler shift, Doppler spread}; (3) "typeC": {Doppler shift, average delay}; (4) "typeD": {Spatial Rx parameter}.

From another perspective, the UE 200 may perform link adaptation by CSI-RS. Specifically, for channel state estimation purposes, the UE 200 may be configured to measure CSI-RS and estimate the DL channel state based on the CSI-RS measurements. The UE 200 feeds the estimated channel state back to the network device (e.g., gNB) to be used in link adaptation.

According to a higher layer configuration (e.g., *CSI-+ReportConfig*)*,* the CSI may include, but not limited to,CQI, PMI, CRI, LI and/or RI, and the associated CSI fields may be generally shown in Table 14.

**Table 14**

| CSI fields |
|---|
| CRI |
| RI |
| LI |
| PMI wideband information |
| Wideband CQI |

In one embodiment, according to a higher layer configuration, the CSI may be transmitted in different manners. In an aperiodic manner, for example when configured with "aperiodic," the CSI may be transmitted via a UL grant DCI that includes a CSI request. In a semi-persistent (SPS) manner, for example when configured with "semiPersistentOnPUCCH," the CSI may be transmitted via a PUCCH activated by a MAC-CE. Alternatively, when configured with "semiPersistentOnPUSCH," the CSI may be transmitted via a CG-PUSCH activated by a UL grant DCI with a CSI request. In a periodic manner, for example when configured with "periodic," the CSI may be transmitted via a PUCCH according to the configured periodicity.

In one embodiment, a UE 200 may perform L1 measurements as part of an LTM or Conditional LTM (C-LTM) procedure. Based on the results of such measurements, the UE 200 may change its serving cell by transmitting or receiving a cell switch command signalled via a MAC CE or RRC signaling to or from a network device (e.g., gNB). The cell switch command may include information related to a C-LTM/LTM candidate configuration that has been previously prepared by the network device (e.g., gNB) and delivered to the UE 200 through RRC signaling. The candidate configuration may correspond to at least one candidate cell, and may comprise information such as candidate ID, physical cell ID, SSB frequency, SCS of the SSB, SSB periodicity, and/or SSB transmission power.

Upon receiving the cell switch command, the processor of the UE 200 may determine that the cell switch procedure is complete after receiving additional information or configuration (e.g., by MAC or RRC signal) from the target candidate cell. The UE 200 may then switch to the target configuration corresponding to the received command.

In another embodiment, the C-LTM/LTM procedure may support intra-network device (e.g., gNB)-DU mobility, intra-network device (e.g., gNB)-CU inter-network device (e.g., gNB)-DU mobility, and may also support intra-frequency or inter-frequency mobility, including mobility to a non-serving inter-frequency cell. For example, C-LTM/LTM may support PCell change in a non-CA and non-DC scenario, PCell and SCell change in a CA scenario, or dual connectivity scenarios where a PCell and MCG SCell change and intra-SN PSCell and SCG SCell change may occur without MN involvement. However, C-LTM/LTM may not support simultaneous PCell and PSCell changes.

Furthermore, when the UE 200 has stored C-LTM/LTM candidate configurations, the UE 200 may also execute an L3 handover (or cell switch) command sent by the network, thereby leveraging preconfigured candidate configurations for efficient mobility management.

In the embodiments of the disclosure, the UE 200 may perform CSI measurement and reporting for multiple cells according to a configuration received from a gNB. The configuration may indicate a first set of RSs (e.g., CSI-RSs) and/or a report quantity. The first set of RSs may be associated with a resource set ID (e.g., *LTM-CSI-ResourceConfigID*)*,* and each RS may be indicated with at least one TCI state information to establish a QCL relationship with a downlink RS (e.g., SSB) associated with a candidate cell ID. The report quantity may comprise at least one of CRI, RI, or CQI. At least one of the RSs may be configured with a single antenna port, and the configuration may further include a rank restriction (e.g., *ri-Restriction = 1*)*.*

In another embodiment, the UE 200 may determine, select, or identify a second set of RSs from the first set for CSI measurement. For example, for a third RS in the first set of RSs, the UE 200 may select the third RS as part of the second set according to at least one of: (i) a quality value (e.g., RSRP) of a fourth RS (e.g., SSB) having a QCL relationship with the third RS, (ii) a quality value (e.g., RSRP) of the third RS itself, or (iii) an indication explicitly provided by the gNB.

In another embodiment, the UE 200 may determine whether to perform CSI measurement for at least one RS in the second set according to a threshold. For example, the CSI measurement may be performed only if the RSRP of the RS is above the threshold.

In a further embodiment, the UE 200 may perform CSI measurement and reporting according to the configuration, wherein the configuration may indicate a reporting type. For example, the reporting type may be aperiodic, semi-persistent on PUCCH, semi-persistent on PUSCH, or periodic. The configuration may also indicate a report quantity, such as requiring the UE 200 to report at least one of SSBRI, CRI, PMI, CQI, RI, i1, or L1-RSRP.

In one embodiment, a method for handling a CSI report used by a UE is provided. The method includes: determining a first CSI according to a first set of reference signal , wherein the first set of reference signal is determined according to a first configuration transmitted by a network device; transmitting the first CSI to the network device according to the first configuration; determining a second CSI according to a second set of reference signal; performing a cell switch with a target candidate cell according to a first information transmitted by the network device; in response to determining that the second CSI does not comprise invalid CSI, transmitting the second CSI to the target candidate cell; and in response to determining that the second CSI comprises at least one invalid CSI, transmitting the second CSI comprising at least one CQI corresponding to a lowest index to the target candidate cell.

In one embodiment, the second set of reference signal is determined according to a second information.

In one embodiment, the first information and the second information are transmitted by a same information by the network device.

In one embodiment, the second information is associated with the first CSI.

In one embodiment, the second information is associated with at least one of cell identity and at least one first signal resource indicator.

In one embodiment, each of the first set of reference signal is respectively associated with a candidate cell index.

In one embodiment, each of the second set of reference signal respectively has a quasi-co-location relationship with a SSB index.

In one embodiment, the first CSI comprises at least one of following: a plurality of second signal resource indicator; a reference signal received power (RSRP); or at least one differential RSRP.

In one embodiment, the first CSI comprises a first number of different signal resource indicators for each of a second number of candidate cells, wherein the first number and the second number are configured by a higher layer signal.

In one embodiment, the second CSI comprises at least one of following: a third signal resource indicator; CQI; PMI; or RI.

In one embodiment, the second CSI is transmitted to the target candidate cell using a first physical uplink shared channel (PUSCH) after receiving the second information.

In one embodiment, wherein the second CSI is carried in a CSI report, and the CSI report is configured as aperiodic.

In one embodiment, the first CSI is associated with a plurality of candidate cells; wherein the second CSI is associated with the target candidate cell.

In one embodiment, the second set of reference signal is determined according to a threshold value.

In one embodiment, wherein the second CSI is associated with a third number of candidate cell and a fourth number of reference signal for each of the third number of candidate cell.

In one embodiment, the method further includes: transmitting a capability information to the network device, wherein the capability information comprises at least one of following: whether the UE supports a first CSI measurement and a first CSI report associated with the first CSI for at least one candidate cell; whether the UE supports a second CSI measurement and a second CSI report associated with the second CSI for the at least one candidate cell; the second CSI measurement is performed before or after receiving a cell switch command; a maximum number of candidate cells for the first CSI measurement or the second CSI measurement; a maximum number of reference signal per cell or per SSB for the first CSI measurement or the second CSI measurement; capability regarding at least one of RI, CQI, PMI and a wideband indication; whether inclusion of a current SpCell in the first CSI report is supported.

In one embodiment, a UE is provided. The UE includes a transceiver and a processor. The processor is coupled to the transceiver and configured to perform: determining a first CSI according to a first set of reference signal, wherein the first set of reference signal is determined according to a first configuration transmitted by a network device; controlling the transceiver to transmit the first CSI to the network device according to the first configuration; determining a second CSI according to a second set of reference signal; performing a cell switch with a target candidate cell according to a first information transmitted by the network device; in response to determining that the second CSI does not comprise invalid CSI, controlling the transceiver to transmit the second CSI to the target candidate cell; and in response to determining that the second CSI comprises at least one invalid CSI, controlling the transceiver to transmit the second CSI comprising at least one CQI corresponding to a lowest index to the target candidate cell.

To sum up, in the embodiments of the disclosure, the UE may be configured by the network device with at least one reporting setting and/or resource setting for CSI measurement and reporting across multiple cells. The configuration may indicate a first set of reference signals (RSs), such as CSI-RSs, associated with one or more candidate cells, and may further specify report quantities including at least one of CRI, RI, and CQI. Each RS may be associated with TCI-state information to establish a QCL relationship with one or more downlink RSs, such as SSBs, corresponding to candidate cell identities.

Based on the configuration, the UE may determine or select a second set of RSs from the first set for CSI measurement. The selection may be performed according to signal quality, such as an RSRP value of an RS or a QCL-related RS, or according to an explicit gNB indication. The UE may further determine whether to perform CSI measurement for at least one RS in the second set according to a threshold condition, thereby avoiding unnecessary measurements for low-quality RSs.

The CSI reporting may be performed in different manners depending on higher layer configuration, including aperiodic, semi-persistent (on PUCCH or PUSCH), or periodic reporting. The CSI report may comprise various reporting quantities, such as SSBRI, CRI, PMI, CQI, RI, i1, and L1-RSRP. By adopting the disclosed configurations and selection mechanisms, the UE can efficiently perform CSI measurement and reporting across multiple cells, thereby improving mobility robustness, reducing signaling overhead, and enhancing link adaptation accuracy.

From another perspective, since the UE can obtain the required CSI measurement before performing the cell switch, the UPT would be less likely to experience the degradation shown in FIG. 1.

## Claims

1. A method for handling a channel status information, CSI, report used by a user equipment, UE, (200) the method being **characterized in** comprising:
determining (S310) a first CSI according to a first set of reference signal, wherein the first set of reference signal is determined according to a first configuration transmitted by a network device;
transmitting (S320) the first CSI to the network device according to the first configuration;
determining (S330) a second CSI according to a second set of reference signal;
performing (S340) a cell switch with a target candidate cell according to a first information transmitted by the network device;
in response to determining that the second CSI does not comprise invalid CSI, transmitting (S360) the second CSI to the target candidate cell; and
in response to determining that the second CSI comprises at least one invalid CSI, transmitting (S370) the second CSI comprising at least one channel quality indicator, CQI, corresponding to a lowest index to the target candidate cell.

2. The method according to claim 1, wherein the second set of reference signal is determined according to a second information.

3. The method according to claim 2, wherein the first information and the second information are transmitted by a same information by the network device.

4. The method according to claim 2,
wherein the second information is associated with the first CSI;
wherein the second information is associated with at least one of cell identity and at least one first signal resource indicator.

5. The method according to any one of claims 1 to 4, wherein each of the first set of reference signal is respectively associated with a candidate cell index.

6. The method according to any one of claims 1 to 4, wherein each of the second set of reference signal respectively has a quasi-co-location relationship with a synchronization signal block, SSB, index.

7. The method according to any one of claims 1 to 4, wherein the first CSI comprises at least one of following:
a plurality of second signal resource indicator;
a reference signal received power, RSRP; or
at least one differential RSRP.

8. The method according to any one of claims 1 to 4,
wherein the first CSI comprises a first number of different signal resource indicators for each of a second number of candidate cells;
wherein the first number and the second number are configured by a higher layer signal.

9. The method according to any one of claims 1 to 4, wherein the second CSI comprises at least one of following:
a third signal resource indicator;
CQI;
precoding matrix indicator, PMI; or
rank indicator, RI.

10. The method according to claim 2, wherein the second CSI is transmitted to the target candidate cell using a first physical uplink shared channel, PUSCH, after receiving the second information.

11. The method according to any one of claims 1 to 4,
wherein the second CSI is carried in a CSI report, and the CSI report is configured as aperiodic;
wherein the first CSI is associated with a plurality of candidate cells;
wherein the second CSI is associated with the target candidate cell.

12. The method according to any one of claims 1 to 4, wherein the second set of reference signal is determined according to a threshold value.

13. The method according to any one of claims 1 to 4, wherein the second CSI is associated with a third number of candidate cell and a fourth number of reference signal for each of the third number of candidate cell.

14. The method according to any one of claims 1 to 4, further comprising:
transmitting a capability information to the network device, wherein the capability information comprises at least one of following:
whether the UE supports a first CSI measurement and a first CSI report associated with the first CSI for at least one candidate cell;
whether the UE supports a second CSI measurement and a second CSI report associated with the second CSI for the at least one candidate cell;
the second CSI measurement is performed before or after receiving a cell switch command;
a maximum number of candidate cells for the first CSI measurement or the second CSI measurement;
a maximum number of reference signal per cell or per SSB for the first CSI measurement or the second CSI measurement;
capability regarding at least one of RI, CQI, PMI and a wideband indication;
whether inclusion of a current special cell, SpCell, in the first CSI report is supported.

15. A user equipment, UE, (200) comprising:
a transceiver (202); and
a processor (204), coupled to the transceiver (202) and **characterized by** being configured to perform:
determining (S310) a first CSI according to a first set of reference signal, wherein the first set of reference signal is determined according to a first configuration transmitted by a network device;
controlling the transceiver to transmit (S320) the first CSI to the network device according to the first configuration;
determining (S330) a second CSI according to a second set of reference signal;
performing (S340) a cell switch with a target candidate cell according to a first information transmitted by the network device;
in response to determining that the second CSI does not comprise invalid CSI, controlling the transceiver to transmit (S360) the second CSI to the target candidate cell; and
in response to determining that the second CSI comprises at least one invalid CSI, controlling the transceiver to transmit (S370) the second CSI comprising at least one CQI corresponding to a lowest index to the target candidate cell.
